**Europäisches Patentamt**

(19) **European Patent Office**

**Office européen des brevets**

(11) Veröffentlichungsnummer: **0 023 067**
**B1**

(12) # EUROPÄISCHE PATENTSCHRIFT

(45) Veröffentlichungstag der Patentschrift:
**16.01.85**

(51) Int. Cl.⁴: **G 11 B 5/52** // G11B15/12

(21) Anmeldenummer: **80200691.6**

(22) Anmeldetag: **16.07.80**

(54) **Bandaufzeichnungs- oder -wiedergabegerät mit rotierendem Magnetkopf.**

(30) Priorität: **20.07.79 AT 5028/79**

(43) Veröffentlichungstag der Anmeldung:
**28.01.81 Patentblatt 81/4**

(45) Bekanntmachung des Hinweises auf die Patenterteilung:
**16.01.85 Patentblatt 85/3**

(84) Benannte Vertragsstaaten:
**BE CH DE FR GB IT LI NL SE**

(73) Patentinhaber: **N.V. Philips' Gloeilampenfabrieken, Groenewoudseweg 1, NL-5621 BA Eindhoven (NL)**

(72) Erfinder: **Eibensteiner, Walter, INT. OCTROOIBUREAU B.V. Prof. Holstlaan 6, NL-5656 AA Eindhoven (NL)**

(74) Vertreter: **Van Weele, Paul Johannes Frits et al, INTERNATIONAAL OCTROOIBUREAU B.V. Prof. Holstlaan 6, NL-5656 AA Eindhoven (NL)**

(56) Entgegenhaltungen:
DE - A - 2 847 550
FR - A - 2 365 853
FR - A - 2 375 778
US - A - 3 076 060
US - A - 3 213 204
US - A - 3 423 743
US - A - 3 509 554
US - A - 3 519 764
US - A - 3 855 628
US - A - 4 040 109

PATENTS ABSTRACTS OF JAPAN, Band 1, Nr. 136, 10. November 1977, Seite 6387 E 77
ELEKTOR, Band 10, Nr. 5, Oktober 1979 "New Home-Video Standard from Philips"

(56) Entgegenhaltungen: (Fortsetzung)
PATENTS ABSTRACTS OF JAPAN, Band 2, Nr. 49, 6. April 1978, Seite 697 E 78
Funkschau, Heft 14, 1979, Seite 12

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Aufzeichnungs- und/ oder Wiedergabegerät mit mindestens einer in einer vorgegebenen Drehrichtung mit einer vorgegebenen Geschwindigkeit rotierend antreibbaren Kopftrommel mit mindestens einem Magnetkopf, welche Kopftrommel ein Teil einer im Bereich des Magnetkopfes angeordneten trommelförmigen Bandführung für ein Magnetband bildet, das über mindestens einen Abschnitt der Mantelfläche der Bandführung und den auf einem vorgegebenen Niveau rotierenden Magnetkopf führbar ist, wobei der Magnetkopf schräg verlaufende parallele Spuren in einer vorgegebenen Abtastrichtung zwischen Bandkante und Bandmitte in einem vorgegebenen Spurmuster von zwei jeweils innerhalb einer der beiden Längshälften des Magnetbandes liegenden Spurmuster abtastet und mit einer Antriebseinrichtung zur Fortbewegung des Magnetbandes in einer vorgegebenen Bewegungsrichtung mit einer vorgegebenen Geschwindigkeit zur Abtastung der Spuren im vorgegebenen Spurmuster. Ein derartiges Gerät ist aus der DE-PS 1 499 627 bekannt. Bei diesem bekannten Gerät ist vorgesehen, dass durch Umdrehen des Magnetbandes die andere Längshälfte desselben ausgenutzt wird, ähnlich wie dies bei bekannten Tonbandgeräten mit Halbspur-Betrieb geschehen kann. Nach dem Umdrehen des Magnetbandes erfolgt dabei die Fortbewegung desselben in der gleichen Bewegungsrichtung wie vorher, ebenso wie die Drehrichtung des rotierend antreibbaren Magnetkopfes die gleiche wie vorher ist. Ein derartiges Gerät wurde vorgestellt in dem Artikel «Philips und Grundig bringen den 8-Stunden-Videorekorder» in Funkschau, Heft 14, 6. Juli 1979. Das notwendige Umdrehen des Magnetbandes wird vielfach als nachteilig angesehen, weil dies eine gewisse Zeit benötigt, während welcher keine Aufzeichnung oder Wiedergabe möglich ist.

Die Erfindung hat sich zum Ziel gesetzt ein Gerät der eingangs angeführten Art zu schaffen, wobei das Wenden der Kassette sich erübrigt. Es soll dabei die Kompatibilität beibehalten bleiben, das heisst dass sämtliche Videokassetten, die schon ganz oder teilweise von einer Aufzeichnung versehen sind, von sämtlichen. Geräten problemlos abgespielt werden können. Für jedes für das grosse Publikum auf dem Markt vorgesehenen Magnetbandaufzeichnungs/wiedergabesystem ist die einwandfreie Auswechselbarkeit von Kassetten und Geräten untereinander von grösster Bedeutung. Die Erfindung ist im Anspruch 1 angegeben. Sie nimmt auf die besondere Spurbildung der eingangs erwähnten Geräte auch in dieser Hinsicht Rücksicht durch eine besondere Kombination von mehreren Merkmalen und weist das Kennzeichen auf, dass mindestens ein auf einem gegenüber dem vorgegebenen Niveau im wesentlichen um einen durch den Betrag der halben Breite des Magnetbandes gegebenen Abstand versetzten weiteren Niveau wirkbarer Magnetkopf auf der Kopftrommel vorgesehen ist, zur Abtastung von schräg verlaufenden parallelen Spuren in dem weiteren, innerhalb der weiteren Längshälfte des Magnetbandes liegenden Spurmuster; dass mit der Antriebseinrichtung das Magnetband gegenüber der vorgegebenen Bewegungsrichtung auch, in an sich bekannter Weise, in der entgegengesetzten Bewegungsrichtung mit der vorgegebenen Geschwindigkeit zur Abtastung der Spuren im weiteren Spurmuster antreibbar ist; dass die Kopftrommel gegenüber der vorgegebenen Drehrichtung in der entgegengesetzten Drehrichtung mit der vorgegebenen Geschwindigkeit rotierend antreibbar ist, damit auch die schräg verlaufenden parallelen Spuren in dem weiteren Spurmuster in der vorgegebenen Abtastrichtung zwischen Bandkante und Bandmitte abgetastet werden; dass eine Umschaltvorrichtung zumindestens für das Umschalten der Drehrichtung der Kopftrommel und der Fortbewegung des Magnetbandes zwischen den erwähnten Richtungen und, falls erforderlich, für das im wesentlichen gleichzeitige Umschalten der elektrischen Signalaus/ eingänge von einem zum anderen Magnetkopf vorgesehen ist; und dass ohne Wenden des Magnetbandes, durch Betätigung der Umschaltvorrichtung die Spuren im weiteren Spurmuster durch den auf dem weiteren Niveau in entgegengesetzten Drehrichtung, mit der vorgegebenen Geschwindigkeit zwischen Bandkante und Bandmitte rotierenden Magnetkopf abtastbar sind.

Auf diese Weise ist ein kontinuierlicher Betrieb des Gerätes möglich, wobei beim Übergang der Abtastung der Spuren von einer Längshälfte zur anderen Längshälfte nur die Bewegungsrichtung des Magnetbandes und die Drehrichtung der Trommel umgekehrt und ein Magnetkopf in Funktion gesetzt werden muss, welcher die Spuren innerhalb der betreffenden Längshälfte abtastet. Für letzteres stehen hierbei eine Reihe von Möglichkeiten zur Verfügung, wie nachfolgend im Detail ausgeführt wird. Das Umschalten der vorgenannten Gerätefunktionen kann hierbei automatisch vom Gerät her gesteuert werden, beispielsweise beim Erreichen des Endes des Magnetbandes, kann aber auch vom Benützer des Gerätes durch Betätigen eines entsprechenden Bedienungsorganes ausgelöst werden. Weitere Ausführungsbeispiele der Erfindung werden in den Ansprüchen 2–11 angegeben.

Es ist in diesem Zusammenhang zu erwähnen, dass die Abtastung eines Magnetbandes wahlweise in entgegengesetzten Bewegungsrichtungen zur Aufzeichnung bzw. Wiedergabe von Tonbandgeräten her an sich bekannt ist. Bei solchen Tonbandgeräten werden aber entweder mit einem verstellbaren Magnetkopf, oder einem von mehreren Magnetköpfen, immer nur Spuren in Längsrichtung des Magnetbandes bei an sich stillstehendem Magnetkopf fortlaufend abgetastet, wobei diese Spuren in der einen Bewegungsrichtung des Magnetbandes in dessen einer Hälfte und in der anderen Bewegungsrichtung des Magnetbandes in dessen anderer Hälfte liegen können, wie dies beispielsweise die US-PS 3 855 628 zeigt. Es ist aber auch schon ein Magnetbandgerät zur Aufzeichnung von Fernsehsignalen bekannt, siehe die JP-OS 53-11013, bei dem mit einem stillstehenden Magnetkopf in der Längsrichtung des Magnetbandes verlaufende Spuren abgetastet werden, wobei am Bandende die Bewegungsrichtung des Magnetbandes umgekehrt und der Magnetkopf durch ein schrittweises Verdrehen an einer zylindrischen Bandführung, über die das Magnetband schraubenlinienförmig hinweggeführt ist, auf eine andere in der Längsrichtung des Magnetbandes verlaufende Spur eingestellt wird. In allen diesen Fällen handelt es sich daher um die Abtastung von in der Längsrichtung des Magnetbandes verlaufenden Spuren mit einem stillstehenden Magnetkopf. Die dabei vorliegenden Verhältnisse sind nicht ohne weiteres übertragbar auf Schrägspurgeräte, bei welchen der Magnetkopf rotierend angetrieben wird, da hierdurch ein bestimmter Verlauf und eine bestimmte Abtastrichtung der Spuren am Magnetband festgelegt wird. Erst durch die im vorliegenden Zusammenhang zusätzlich vorgesehene Umkehrung der Drehrichtung des Magnetkopfes bei einer Umkehrung der Bewegungsrichtung des Magnetbandes wird erreicht, dass die Abtastung der in beiden Hälften des Magnetbandes liegenden schrägen Spuren ordnungsgemäss erfolgt, so wie dies bei den vorstehend angeführten bekannten Geräten, ohne zusätzliche Massnahmen, von selbst bei in Längsrichtung des Magnetbandes verlaufenden Spuren der Fall ist.

Es ist aus der französischen Patentanmeldung FR-A 2 375 778 an sich das Teilmerkmal in einem Schrägspurgerät bekannt, dass ein auf einem gegenüber dem vorgegebenen Niveau um einen durch den Betrag der halben Breite des Magnetbandes gegebenen Abstand versetzten weiteren Niveau wirkbarer Magnetkopf vorgesehen ist. Es handelt sich dabei um ein Gerät, in dem das aufzuzeichnende Signal über mehrere Köpfe verteilt und parallel in die beiden Spurmuster aufgezeichnet wird. Die Köpfe drehen also immer in der selben Richtung und das Magnetband hat nur eine Laufrichtung.

Es ist weiter aus der französischen Patentanmeldung FR-A 2 365 853 ein Schrägspurgerät an sich bekannt, wobei die Laufrichtung des Magnetbandes umkehrbar ist. Die Magnetköpfe drehen aber immer in der vorgegebenen Richtung. Es handelt sich um ein Analysesystem womit einzelne aufgezeichnete Spuren analysiert werden können sowohl in normaler Laufrichtung als in Rücklauf.

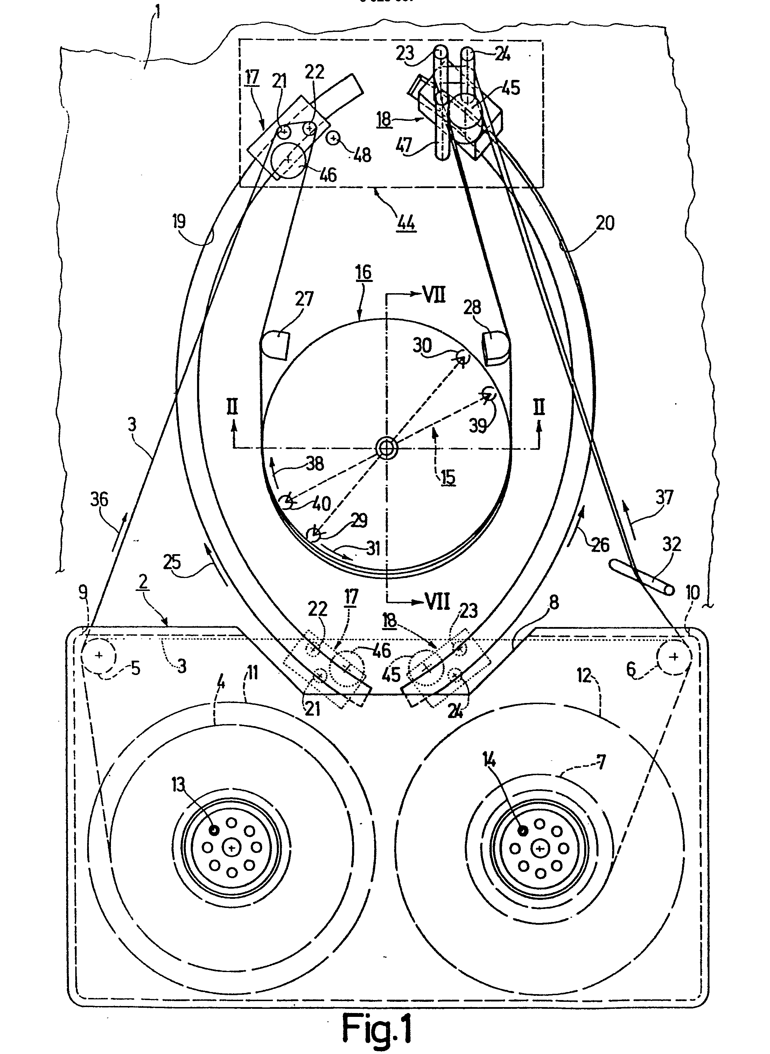

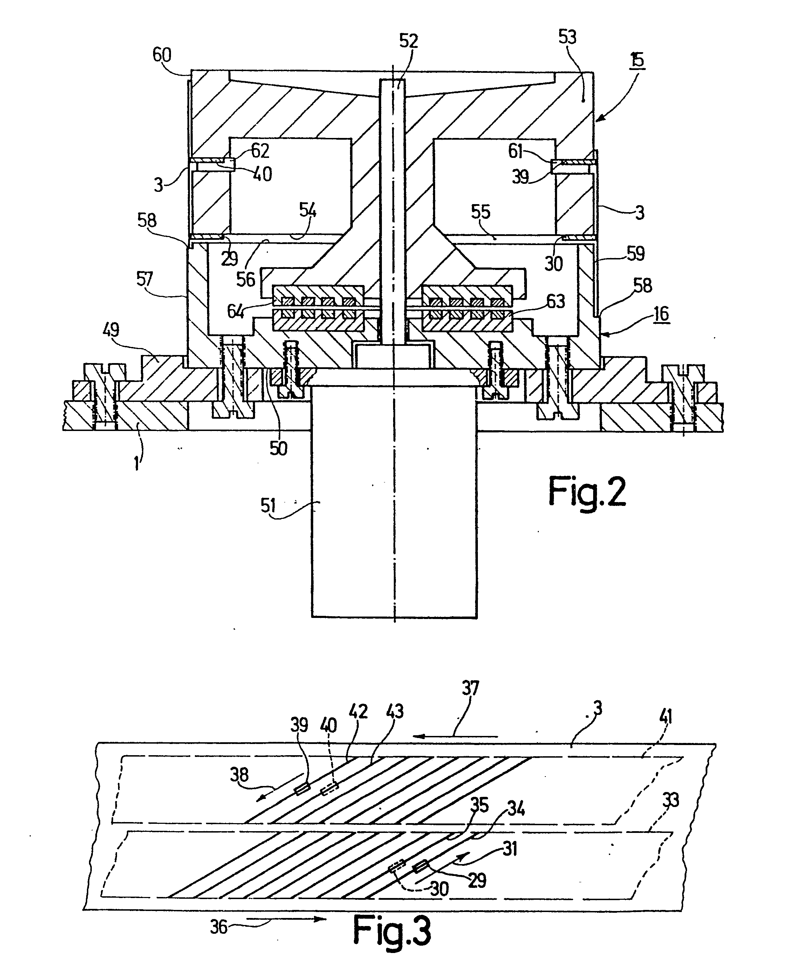

Die Erfindung wird im folgenden an Hand der Zeichnungen, in welchen einige Ausführungsbeispiele der Erfindung teilweise schematisiert dargestellt sind, auf welche die Erfindung jedoch nicht beschränkt sein soll, näher erläutert. Fig. 1 zeigt in Draufsicht ein Aufzeichnungs- und/oder Wiedergabegerät mit dem Verlauf des Magnetbandes von einer Vorratsspule über eine trommelförmige Bandführung und eine koaxial zu derselben angeordnete, rotierend antreibbare Magnetkopfanordnung zu einer Aufwickelspule. In Fig. 2 ist eine trommelförmige Bandführung und eine koaxial zu derselben angeordnete, rotierend antreibbare, Magnetköpfe tragende Trommel im Schnitt nach der Linie II–II von Fig. 1 im Detail dargestellt.

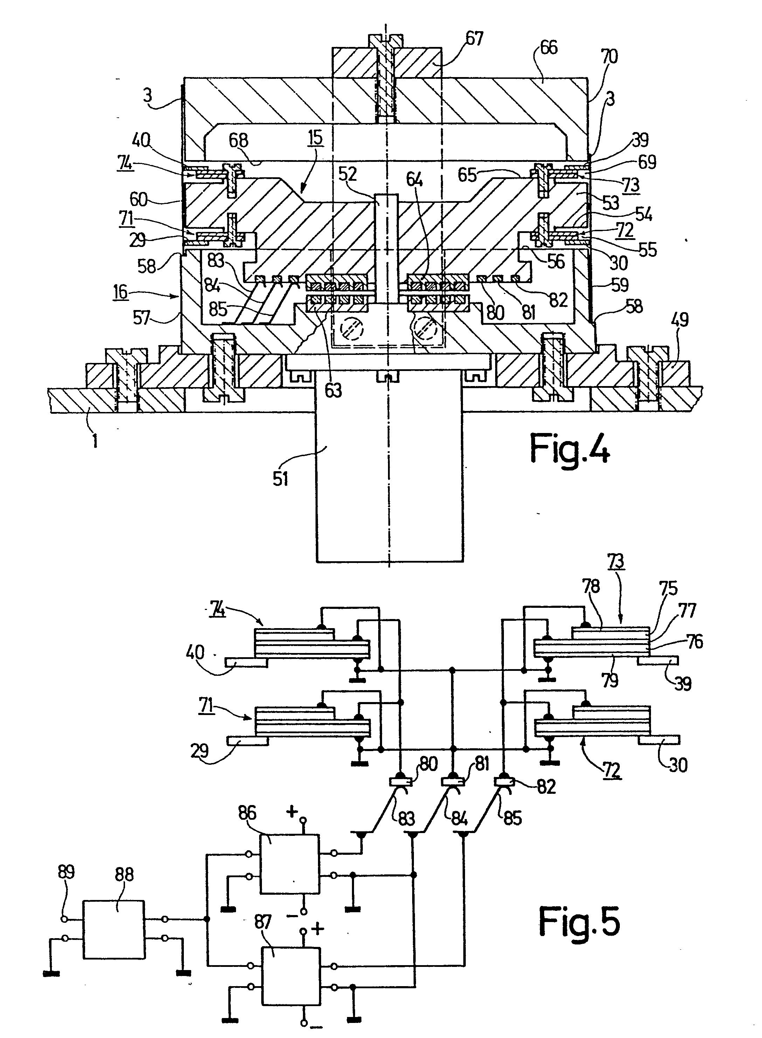

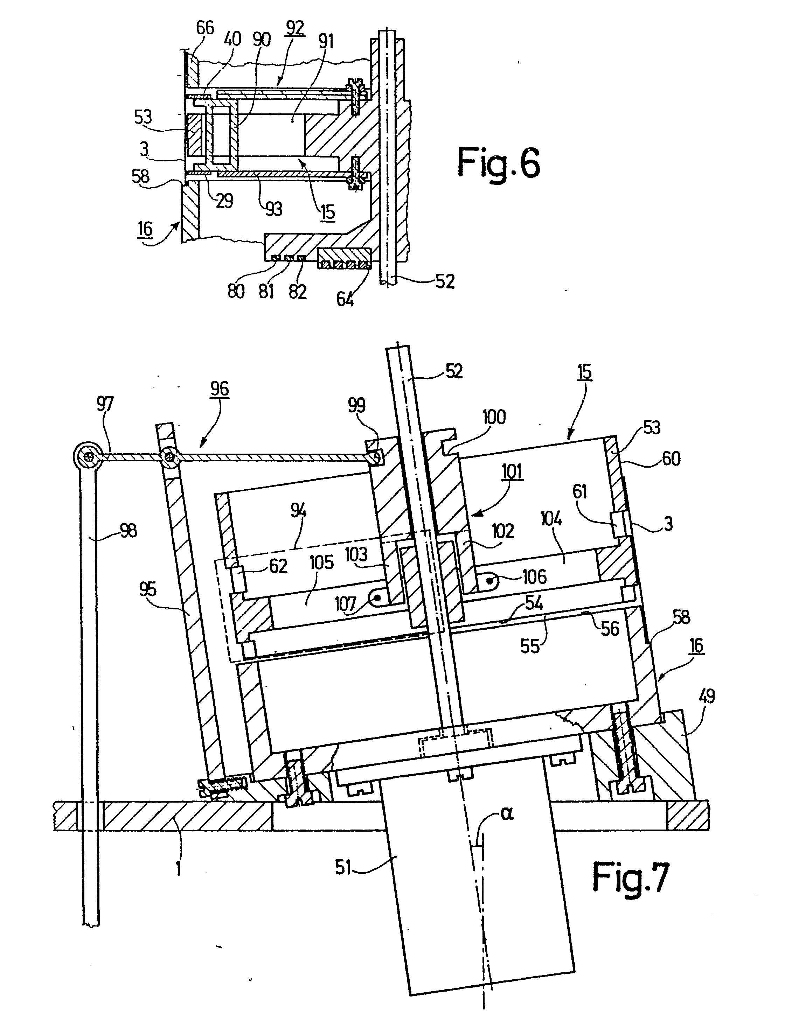

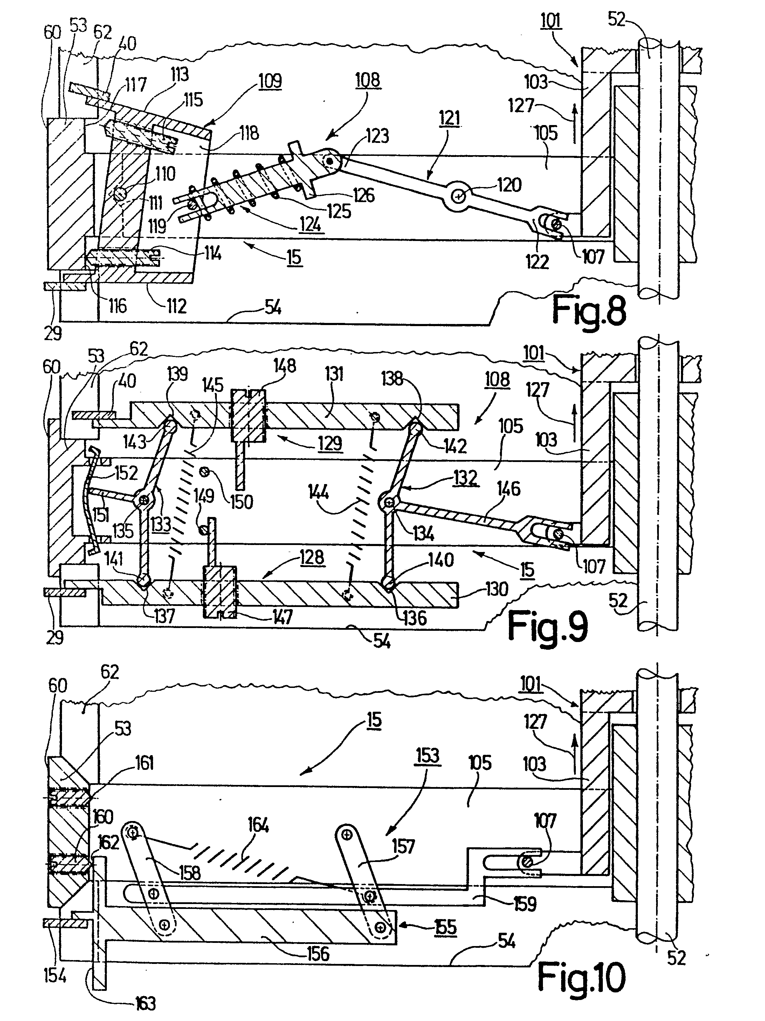

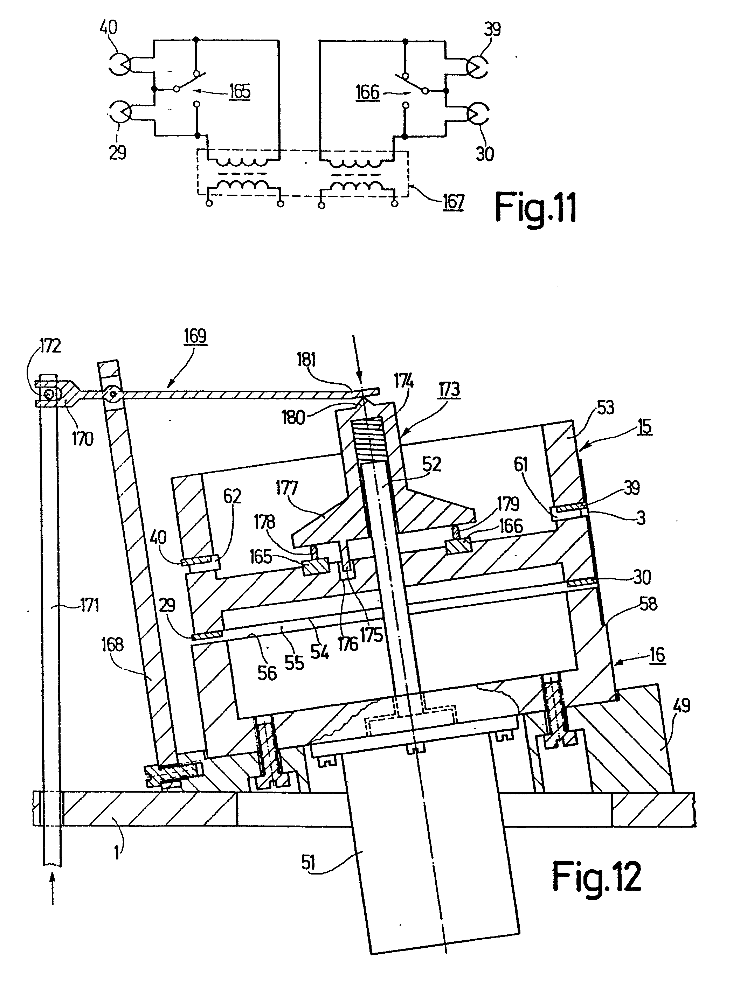

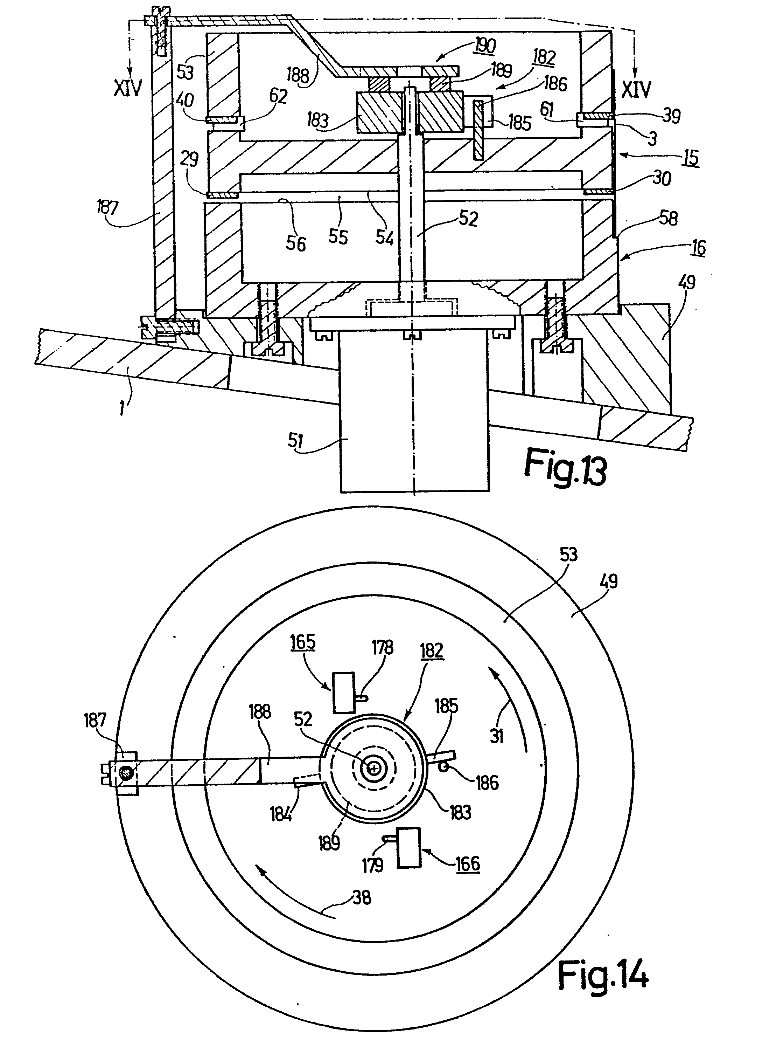

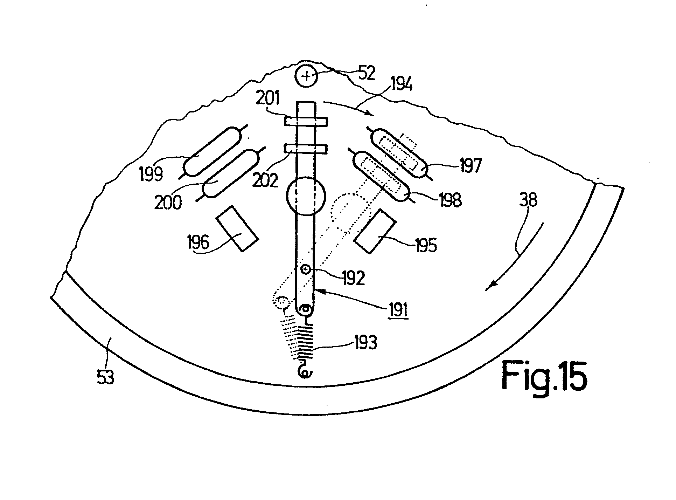

Fig. 3 zeigt ein Spurmuster am Magnetband. In Fig. 4 ist in analoger Darstellungsweise zu Fig. 2 eine Trommel zusammen mit zwei trommelförmigen Bandführungen dargestellt, wobei die Magnetköpfe über elektrisch steuerbare Positionierelemente mit der Trommel verbunden sind. Fig. 5 zeigt ein Schaltbild zur elektrischen Steuerung der Positionierelemente nach Fig. 4. In Fig. 6 ist ausschnittsweise eine Anordnung zur Spurführung von zwei Magnetköpfen mit einem einzigen elektrisch steuerbaren Positionierelement dargestellt. Fig. 7 zeigt eine trommelförmige Bandführung und eine Trommel im Schnitt nach der Linie VII–VII von Fig. 1, sowie eine Einrichtung zur Übertragung einer Verstellbewegung vom Gerät her auf die Trommel. Fig. 8 zeigt im Detail einen in Fig. 7 angegebenen Ausschnitt der Trommel, wobei zwei Magnetköpfe zu ihrer Verstellung auf einer Wippe angeordnet sind. Fig. 8 zeigt im Detail den gleichen in Fig. 7 angegebenen Ausschnitt der Trommel, wobei zwei Magnetköpfe zu ihrer Verstellung auf je einem Gelenkviereck angeordnet sind. Fig. 10 zeigt im Detail den gleichen in Fig. 7 angegebenen Ausschnitt der Trommel, wobei ein einziger Magnetkopf zu seiner Verstellung in zwei Niveaus auf einem Gelenkviereck angeordnet ist. Fig. 1 zeigt ein Schaltbild zur elektrischen Aktivierung bzw. Desaktivierung von Magnetköpfen auf einer Trommel. Fig. 12 zeigt in analoger Darstellungsweise zu Fig. 7 eine Trommel, auf welcher eine vom Gerät her betätigbare Schalteranordnung vorgesehen ist. In Fig. 13 ist in gleiche Darstellungsweise wie in Fig. 12 eine Trommel gezeigt, auf welcher eine Schalteranordnung mit einem Flügel automatisch je nach der Drehrichtung der Trommel betätigbar ist. Fig. 14 zeigt die Anordnung nach Fig. 13 in einer Ansicht nach der Linie XIV–XIV in Fig. 13. In Fig. 15 ist der Ausschnitt einer Trommel dargestellt, auf welcher eine Schalteranordnung mit einem pendelförmigen Hebel automatisch je nach der Drehrichtung der Trommel betätigbar ist.

In Fig. 1 ist mit 1 das Chassis eines Aufzeichnungs- und/oder Wiedergabegerätes bezeichnet, auf welches eine Kassette 2 aufgesetzt ist. In dieser Kassette ist ein Magnetband 3 untergebracht, welches bei sich in seiner Ausgangslage befindendem Gerät von einem Bandwickel 4 über eine Umlenkrolle 5 zu einer weiteren Umlenkrolle 6 und zu einem zweiten Bandwickel 7 verläuft, wie dies mit unterbrochenen Linien dargestellt ist. Die Kassette ist mit einer Ausnehmung 8 und seitlich daran anschliessenden Öffnungen 9 und 10 versehen, in deren Bereich hierbei das Magnetband verläuft. Die Bandwickel 4 bzw. 7 werden von Spulen 11 bzw. 12 getragen, die in üblicher Weise von geräteseitigen Wickeldornen 13 bzw. 14 her antreibbar sind.

Zur Aufzeichnung und/oder Wiedergabe von Signalen, insbesondere von Fernsehsignalen, auf dem Magnetband wird dieses aus der Kassette 2 herausgeführt und um die Mantelfläche einer rotierend antreibbaren, in Fig. 1 schematisch angedeuteten Magnetkopfanordnung 15 sowie einer im Bereich derselben angeordneten, ebenfalls schematisch angedeuteten, trommelförmigen Bandführung 16 geschlungen, wie dies in Fig. 1 mit vollen Linien dargestellt ist. Zum Überführen des Magnetbandes von der Kassette zur Magnetkopfanordnung 15 und Bandführung 16 dienen zwei Bandumlenkeinrichtungen 17 und 18, die entlang Führungsbahnen 19 und 20 verstellbar sind. In der Ausgangslage des Gerätes befinden sich die Bandumlenkeinrichtungen 17 und 18 im Bereich der Ausnehmung 8 der Kassette 2, wie dies mit punktierten Linien angedeutet ist. Hierbei hintergreifen je zwei auf den Bandumlenkeinrichtungen angeordnete Führungsstifte 21 und 22 bzw. 23 und 24 das Magnetband im Bereich der Ausnehmung 8 der Kassette. Bei der Verstellung der Bandumlenkeinrichtungen 17 und 18 in Richtung der Pfeile 25 bzw. 26 in die in Fig. 1 mit vollen Linien dargestellten Betriebslage erfassen die Führungsstifte 21, 22 bzw. 23, 24 das Magnetband, wobei es aus der Kassette herausgezogen und um die Magnetkopfanordnung 15 sowie Bandführung 16 geschlungen wird. Gleichzeitig tritt das Magnetband noch mit feststehenden Magnetköpfen 27 und 28 in Wirkverbindung, die in üblicher Weise zum Aufzeichnen, Wiedergeben oder Löschen von zusätzlichen Informationen in eigenen Längsspuren am Magnetband dienen.

Beim vorliegenden Ausführungsbeispiel ist eine schraubenlinienförmige Umschlingung der Bandführung 16 und Magnetkopfanordnung 15 mit etwa 180° vorgesehen. Gemäss diesem Systemparameter weist die Magnetkopfanordnung 15 zwei auf einem vorgegebenen Niveau rotierende Magnetköpfe 29 und 30 auf, die einander gegenüber um etwa 180° versetzt sind, wodurch bei einer Umdrehung der Magnetkopfanordnung mit einer vorgegebenen, durch den Pfeil 31 angegebenen Drehrichtung nacheinander jeder der beiden Magnetköpfe am Magnetband je eine schräg verlaufende Spur abtastet. Zur Erzielung einer solchen schraubenlinienförmigen Umschlingung ist die Bandführung 16 sowie die Magnetkopfanordnung 15 um einen bestimmten Winkel α in Richtung von der Kassette weg geneigt am Chassis 1 angeordnet. Auf diese Weise verläuft das Magnetband vom Führungsstift 22 parallel zum Chassis 1 zur Bandführung 16 und Magnetkopfanordnung 15 und verlässt diese in Richtung zum Führungsstift 23 mit einem Winkel 2α zum Chassis 1 hin geneigt. Um das Magnetband wieder auf das Niveau der Kassette zurückzuführen, ist die Bandumlenkeinrichtung 18 in ihrer Betriebslage, beispielsweise durch einen entsprechenden räumlichen Verlauf der Führungsbahn 20, in analoger Weise um den Winkel 90°−2α geneigt, wodurch das den Führungsstift 24 verlassende Magnetband um den Winkel 2α zur Kassette hin ansteigt. Mit einem weiteren entsprechend geneigt und orientierten Führungsstift 32 wird das Magnetband wieder in einen parallelen Verlauf zum Chassis 1 umgelenkt, wonach es in die Kassette zur Umlenkrolle 6 eintreten kann. Der Neigungswinkel α der

Bandführung 16 und Magnetkopfanordnung 15 ist dabei so gewählt, dass die Magnetköpfe 29 und 30, wie in Fig. 3 angegeben, nacheinander, schräg verlaufende, je für sich innerhalb einer Längshälfte 33 des Magnetbandes 3 liegende Spuren 34, 35 usw. abtasten. Hierbei können die einzelnen Spuren entweder vom betreffenden Rand des Magnetbandes zu dessen Mitte oder von der Mitte des Magnetbandes zu dessen Rand verlaufen, was davon abhängt, wie die Magnetkopfanordnung relativ zum Magnetband verläuft. Im Bereich des Randes und der Mitte des Magnetbandes können dabei relativ schmale Zonen frei bleiben, in welchen dann Längsspuren unterbringbar sind, die mit den Magnetköpfen 27 bzw. 28 abgetastet werden. Selbstverständlich könnte auch eine andere Art der Umschlingung der Bandführung 16 und Magnetkopfanordnung 15 gewählt werden, wie mit einem Umschlingungswinkel von etwa 360° oder mit einem Umschlingungswinkel von weniger als 180°, wobei sich dann die Anzahl der erforderlichen Magnetköpfe auf einen oder mehr als zwei analog ändert, wie dies vom Stand der Technik her durchaus bekannt ist.

Bei einem derartigen Gerät ist nun vorgesehen, dass das Magnetband gegenüber einer vorgegebenen Bewegungsrichtung, beispielsweise vom Bandwickel 4 über die Bandführung 16 und Magnetkopfanordnung 15 zum Bandwickel 7, wie dies in Fig. 1 durch den Pfeil 36 angedeutet ist in der das Magnetband mit einer vorgegebenen Geschwindigkeit zur Abtastung der Spuren angetrieben wird, wahlweise auch in der entgegengesetzten Bewegungsrichtung mit der vorgegebenen Geschwindigkeit zur Abtastung der Spuren antreibbar ist. In dieser entgegengesetzten Bewegungsrichtung verläuft dann das Magnetband vom Bandwickel 7 über die Bandführung 16 und Magnetkopfanordnung 15 zum Bandwickel 4, wie dies in Fig. 1 durch den Pfeil 37 angedeutet ist. Ferner ist vorgesehen, dass bei entgegengesetzter Bewegungsrichtung 37 des Magnetbandes mit der Magnetkopfanordnung 15, bei zu ihrer vorgegebenen Drehrichtung 31 nunmehr ebenfalls entgegengesetzter Drehrichtung 38 derselben, wieder durch zwei Magnetköpfe 39 und 40, die auf einem gegenüber dem vorgegebenen Niveau der Magnetköpfe 29 und 30 im wesentlichen um einen durch den Betrag der halben Breite des Magnetbandes gegebenen Abstand versetzten weiteren Niveau wirksam sind, schräg verlaufende, je für sich in der zweiten Längshälfte 41 des Magnetbandes 3 liegende Spuren 42, 43, usw. abgetastet werden, wie dies aus Fig. 3 ersichtlich ist. Auf diese Weise ist erreicht, dass in einer Bewegungsrichtung 36 des Magnetbandes, die je für sich innerhalb der Längshälfte 33 des Magnetbandes liegenden Spuren und in der entgegengesetzten Bewegungsrichtung 37 des Magnetbandes, die je für sich innerhalb der zweiten Längshälfte 41 des Magnetbandes liegenden Spuren abgetastet werden. Dabei ist ohne längere Unterbrechung ein Übergang von der Abtastung der Spuren in einer Längshälfte zur Abtastung der Spuren in der anderen Längshälfte möglich, da es hierzu lediglich erforderlich ist, die Bewegungsrichtung des Magnetbandes umzukehren und im entsprechenden Niveau mit entsprechender Drehrichtung rotierende Magnetköpfe zur Funktion zu bringen, was beispielsweise automatisch vom Gerät her, beim Erreichen einer bestimmten Stelle oder des Endes des Magnetbandes oder vom Benützer des Gerätes her, durch Betätigung eines entsprechenden Bedienungsorganes geschehen kann.

Zur Erzielung einer umkehrbaren Bewegungsrichtung des Magnetbandes, wobei dieses jeweils mit einer vorgegebenen Geschwindigkeit zur Abtastung der Spuren fortbewegt wird, ist beim vorliegenden Ausführungsbeispiel eine Antriebseinrichtung 44 für das Magnetband vorgesehen, die zwei jeweils in zueinander entgegengesetzten Drehrichtungen antreibbare, je mit einer Andruckrolle 45 bzw. 46 zusammenwirkende Antriebswellen 47 bzw. 48 aufweist, von welchen die Antriebswelle 47 in der vorgegebenen Bewegungsrichtung 36 des Magnetbandes gesehen und die Antriebswelle 48 in der entgegengesetzten Bewegungsrichtung 37 des Magnetbandes gesehen nach der Bandführung 16 und Magnetkopfanordnung 15 angeordnet ist. Die Antriebswellen 47 und 48 sind hierbei am Chassis 1 montiert, wogegen die ihnen zugeordneten Andruckrollen 45 bzw. 46 auf den verstellbaren Bandumlenkeinrichtungen 18 bzw. 17 angeordnet sind, so dass sie wahlweise mit dem Magnetband und der entsprechenden Antriebswelle in Wirkverbindung gebracht werden können. Wie aus Fig. 1 ersichtlich, arbeitet die Antriebswelle 47 mit einem Abschnitt des Magnetbandes zusammen, der im Winkel 2α gegenüber dem Chassis geneigt verläuft, weshalb diese Antriebswelle so am Chassis angeordnet ist, dass sie senkrecht zu diesem Abschnitt des Magnetbandes und damit achsparallel zu den Führungsstiften 23, 24 und der Andruckrolle 45 auf der Bandumlenkeinrichtung 18 verläuft. Die Antriebswelle 48 arbeitet hingegen mit einem Abschnitt des Magnetbandes zusammen, der parallel zum Chassis verläuft, weshalb sie senkrecht zum Chassis angeordnet ist, wobei sie dann achsparallel zu den Führungsstiften 21, 22 und der Andruckrolle 46 auf der Bandumlenkeinrichtung 17 verläuft. Von diesen beiden Antriebswellen 47 und 48 ist jeweils nur die in der betreffenden Bewegungsrichtung des Magnetbandes gesehen nach der Bandführung 16 und Magnetkopfanordnung 15 angeordnete Antriebswelle wirksam.

In Fig. 1 ist die Fortbewegung des Magnetbandes in der vorgegebenen Bewegungsrichtung 36 dargestellt, in der die Antriebswelle 47 wirksam ist. Demgemäss ist die Bandumlenkeinrichtung 18 so weit in Richtung des Pfeiles 26 verstellt, dass die auf ihr angeordnete Andruckrolle 45 mit dem Magnetband und der Antriebswelle 47 in Wirkverbindung steht. Die Bandumlenkeinrichtung 17 ist hierbei in Richtung des Pfeiles 25 nur bis in den Bereich der Antriebswelle 48 verstellt, so dass die auf ihr angeordnete Andruckrolle 46 nicht mit der Antriebswelle 48 in Wirkverbindung steht, wodurch bei dieser Bewegungsrichtung des Magnetbandes diese Antriebswelle nicht in Funktion ist.

Um das Magnetband in der entgegengesetzten Bewegungsrichtung 37 anzutreiben, ist es lediglich erforderlich, die Bandumlenkeinrichtung 18 etwas entgegen der Richtung des Pfeiles 26 zu verstellen, so dass die Andruckrolle 45 von der Antriebswelle 47 freikommt und die Bandumlenkeinrichtung 17 noch etwas weiter in Richtung des Pfeiles 25 zu verstellen, so dass die auf ihr angeordnete Andruckrolle 46 nunmehr mit der Antriebswelle 48 in Wirkverbindung kommt. Selbstverständlich wäre es auch möglich, beide Bandumlenkeinrichtungen 18 und 17 in eine Endlage gegenüber den Antriebswellen 47 und 48 zu verstellen, in der die Andruckrollen noch nicht mit den Antriebswellen in Wirkverbindung stehen und dann je nach der gewünschten Bewegungsrichtung des Magnetbandes entweder die Andruckrolle 45 an die Antriebswelle 47 oder die Andruckrolle 46 an die Antriebswelle 48 heranzuschwenken. Je nach der Bewegungsrichtung des Magnetbandes ist es natürlich auch erforderlich, die Wickeldorne 13 bzw. 14 in der entsprechenden Drehrichtung anzutreiben, damit das von einem der beiden Bandwickel 4 bzw. 7 abgezogenen Band auf den anderen Bandwickel aufgewickelt wird.

Eine derartige Antriebseinrichtung 44, mit zwei jeweils in zueinander entgegengesetzten Drehrichtungen antreibbaren, in der beschriebenen Weise gegenüber der Bandführung 16 und Magnetkopfanordnung 15 angeordneten Antriebswellen 47 bzw. 48, ergibt in beiden Bewegungsrichtungen 36 bzw. 37 des Magnetbandes einen exakten Lauf desselben über die Bandführung 16 und Magnetkopfanordnung 15, was im Hinblick auf eine einwandfreie Aufzeichnung bzw. Wiedergabe der Signale sehr wichtig ist. Selbstverständlich könnte eine solche Antriebseinrichtung aber auch anders aufgebaut sein, beispielsweise in der Weise, dass nur eine Antriebswelle vorgesehen ist, an die mit einer von zwei Andruckrollen jeweils der von der Bandführung 16 und Magnetkopfanordnung 15 ablaufende Abschnitt des Magnetbandes, bei entsprechender Umkehr der Drehrichtung der Antriebswelle, in Wirkverbindung gebracht wird.

Hinsichtlich der Ausbildung und Funktionsweise der Bandführung 16 und Magnetkopfanordnung 15, die in Fig. 1 nur schematisch dargestellt sind, gibt es eine Reihe von Möglichkeiten, die im Folgenden an Hand einiger Ausführungsbeispiele erläutert werden.

Beim Ausführungsbeispiel nach Fig. 2 ist am Chassis 1 eine Tragplatte 49 befestigt, welche die Bandführung 16 und Magnetkopfanordnung 15 trägt. Die Bandführung 16 besteht hierbei aus einer an der Tragplatte 49 befestigten hohlen Trommel, an deren Bodenfläche 50 koaxial ein Motor 51 angeflanscht ist, dessen Antriebswelle 52 die Trommel durchsetzt. Auf dieser Antriebswelle 52 ist eine weitere hohle Trommel 53 befestigt, welche mit einem Trommelrand 54 einen Spalt 55 gegenüber dem freien Rand 56 der Bandführung 16 bildet. Diese vom Motor 51 her rotierend antreibbare Trommel 53 dient als Träger für die Magnetköpfe der Magnetkopfanordnung 15. In der Mantelfläche 57 der Bandführung 16 ist eine schraubenlinienförmige Stufe 58 eingearbeitet, die vom freien Rand 56 der Bandführung ausgehend, um im wesentlichen die halbe Breite des Magnetbandes in Richtung zum Chassis abfallend und um 180° rund um die Bandführung verläuft. Die Stufe 58 bildet eine Führung für einen Rand des Magnetbandes 3, das hierbei entlang der ebenfalls als Führung wirksamen, abgesetzten Mantelfläche 59 der Bandführung 16 verläuft. Eine weitere Führung für das Magnetband bildet die Mantelfläche 60 der Trommel 53, entlang welcher über einen Abschnitt von ebenfalls 180° das Magnetband im wesentlichen entlang seiner gesamten Breite geführt ist. Aus Fig. 2 ist diese Umschlingung der Bandführung 16 und der Trommel 53 durch das Magnetband 3 ersichtlich. In der vorgegebenen Bewegungsrichtung 36 des Magnetbandes läuft dieses mit im wesentlichen seiner gesamten Breite auf die Mantelfläche 60 der Trommel auf, um sie nach der schraubenlinienförmigen Umschlingung um etwa 180° mit etwa der halben Breite des Magnetbandes wieder zu verlassen. Dementsprechend läuft das Magnetband 3 in der Bewegungsrichtung 36 auf die Bandführung 16, geführt durch die Stufe 58 auf derselben, nur im Bereich des freien Randes 56 auf deren abgesetzte Mantelfläche 59 auf, um diese nach der schraubenlinienförmigen Umschlingung um 180° mit etwa der halben Breite des Magnetbandes wieder zu verlassen.

Die in der vorgegebenen Bewegungsrichtung 36 des Magnetbandes wirksamen Magnetköpfe 29 und 30 der Magnetkopfanordnung 15 sind in bekannte Weise im Bereich des Trommelrandes 54 einander diametral gegenüberliegend an der Trommel 53 angeordnet, wodurch sie in einem vorgegebenen Niveau rotieren und im Umschlingungsbereich von 180° jeweils mit dem Magnetband 3 in Wirkverbindung treten. Wie bereits erläutert und in Fig. 1 dargestellt, tasten hierbei die Magnetköpfe 29 und 30 schräg verlaufende je für sich innerhalb der Längshälfte 33 des Magnetbandes 3 liegende Spuren 34, 35, usw. ab.

Bei dem vorliegenden Ausführungsbeispiel sind nun an der Trommel 53 zwei einander diametral gegenüberliegende, in deren Mantelfläche 60 mündende, in radialer Richtung verlaufende Öffnungen 61 und 62 vorgesehen, die gegenüber dem Trommelrand 54, in axialer Richtung der Trommel gesehen, im wesentlichen um einen durch den Betrag der halben Breite des Magnetbandes gegebenen Abstand versetzt liegen. In diesen Öffnungen 61 und 62 ist je ein weiterer Magnetkopf 39 bzw. 40 der Magnetkopfanordnung 15 angeordnet, wodurch diese auf einem weiteren Niveau rotieren, das gegenüber dem vorgegebenen Niveau, auf dem die Magnetköpfe 29 und 30 rotieren, im wesentlichen um einen durch den Betrag der halben Breite des Magnetbandes gegebenen Abstand versetzt ist. Die Magnetköpfe 39 und 40 treten hierbei ebenfalls mit dem Magnetband in Wirkverbindung, da dieses auf dem weiteren Niveau die Trommel 53 ebenfalls um 180° umschlingt. Wird die Trommel 53 mit der, der vorgegebenen Drehrichtung 31 entgegengesetzten Drehrichtung 38 durch Umpolung des Motors 51 angetrieben, so tasten die Magnetköpfe 39 und 40 hierbei schräg verlaufende, je für sich innerhalb der zweiten Längshälfte 41 des Magnetbandes 3 liegende Spuren 42, 43 usw. ab, wenn hierbei das Magnetband in der, der vorgegebenen Bewegungsrichtung 36 entgegengesetzten Bewegungsrichtung 37 fortbewegt wird, wie dies aus Fig. 3 ersichtlich ist.

Beim vorliegenden Ausführungsbeispiel sind somit alle vier Magnetköpfe 29, 30, 39 und 40 der Magnetkopfanordnung 15 stets mit dem Magnetband 3 in Wirkverbindung. Es ist daher ferner vorgesehen, dass je nach der Drehrichtung der Trommel 53 immer nur die beiden Magnetköpfe 29, 30 bzw. 39, 40 elektrisch aktiviert werden, welche in dem Niveau liegen, welches derjenigen Längshälfte des Magnetbandes zugeordnet ist, in der, bei der betreffenden Drehrichtung der Trommel 53 und der entsprechenden Bewegungsrichtung des Magnetbandes, die Spuren abgetastet werden sollen. Bei der Drehrichtung 31 der Trommel 53 werden daher die Magnetköpfe 29 und 30 und bei der Drehrichtung 38 der Trommel 53 die Magnetköpfe 39 und 40 elektrisch aktiviert, indem ihnen bei einer Aufzeichnung das Nutzsignal zugeführt bzw. bei einer Wiedergabe das von ihnen gelieferte Signal abgenommen wird. Zur Zuführung bzw. Abführung der Signale zu den Magnetköpfen dient ein rotierender Transformator, dessen stillstehende Hälfte 63 an der Bandführung 16 und dessen rotierende Hälfte 64 an der Trommel 53 befestigt ist. Diese Transformatorhälften weisen je vier, einander gegenüberliegende und dadurch miteinander elektrisch gekoppelte Ringwicklungen auf, wobei die an der rotierenden Transformatorhälfte 63 vorgesehenen Ringwicklungen auf nicht näher dargestellte Weise je mit einem der vier Magnetköpfe verbunden sind, wogegen die an der stillstehenden Transformatorhälfte 63 vorgesehenen Ringwicklungen mit der elektrischen Schaltung des Gerätes in Verbindung stehen.

Beim Ausführungsbeispiel nach Fig. 4 ist wieder eine Trommel 53 als Träger für vier Magnetköpfe 29, 30, 39 und 40 vorgesehen, wobei die Magnetköpfe 29 und 30 wieder auf dem vorgegebenen Niveau und die Magnetköpfe 39 und 40 auf einem weiteren Niveau rotieren, das gegenüber dem vorgegebenen Niveau im wesentlichen um einen durch den Betrag der halben Breite des Magnetbandes gegebenen Abstand, in axialer Richtung der Trommel gesehen, versetzt ist. Die Magnetköpfe 29 und 30 sind dabei ebenfalls wieder im Bereich des Randes 54 der Trommel 53 angeordnet. Beim vorliegenden Ausführungsbeispiel weist jedoch die Trommel 53 eine Höhe auf, die im wesentlichen nur etwa der halben Breite des Magnetbandes entspricht. Damit besteht die Möglichkeit, die Magnetköpfe 39 und 40 im Bereich des zweiten Randes 65 dieser Trommel anzuordnen, welcher dem Rand 54 derselben gegenüber liegt. Auf diese Weise ist die Trommel 53 für sich einfacher herzustellen.

Mit dieser Trommel 53 wirkt wieder eine als Trommel ausgebildete Bandführung 16 zusammen, an welcher der Motor 51 angeflanscht ist, auf dessen Achse 52 die Trommel 53 befestigt ist. Im übrigen ist diese Bandführung 16 vollkommen analog zu derjenigen nach dem Ausführungsbeispiel von Fig. 2 ausgebildet. Die Magnetköpfe 29 und 30 verlaufen dabei wieder in einem Spalt 55, der zwischen dem Rand 54 der Trommel 53 und dem freien Rand 56 der Bandführung 16 gebildet ist. Da beim vorliegenden Ausführungsbeispiel, wie ersichtlich, die, die Magnetköpfe tragende, nur etwa eine Höhe entsprechend der halben Breite des Magnetbandes aufweisende Trommel 53 mit ihrer Mantelfläche 60 dem Magnetband 3 nicht über dessen im wesentlichen ganze Breite Unterstützung und Führung bieten kann, ist eine weitere Trommel 66 als zusätzliche Bandführung vorgesehen. Diese Trommel 66 ist koaxial zur Bandführung 16 und der Trommel 53, dem Rand 65 derselben gegenüberliegend angeordnet und mit einem L-förmigen Bügel 67, welcher die Trommel 53 umgreift, mit der Bandführung 16 fest verbunden. Zwischen dem der Trommel 53 zugewandten freien Rand 68 der Trommel 66 ist, analog zum Spalt 55, ebenfalls ein Spalt 69 gebildet, in dem nunmehr die Magnetköpfe 39 und 40 verlaufen. Die Mantelfläche 70 der Trommel 66 bildet in üblicher Weise eine Führungsfläche für das Magnetband 3, welches diese Trommel 66 abschnittsweise in einem Bereich von 180° schraubenlinienförmig umschlingt, analog wie dies bei der Bandführung 16 der Fall ist. Damit ist wieder für eine exakte Führung des Magnetbandes um die Magnetkopfanordnung gesorgt.

Beim vorliegenden Ausführungsbeispiel ist jeder der Magnetköpfe 29, 30, 39 und 40 über je ein elektrisch steuerbares Positionierelement 71, 72, 73 und 74 mit der Trommel verbunden, was natürlich auch beim Ausführungsbeispiel nach Fig. 2 der Fall sein könnte. Solche Positionierelemente dienen zur Führung des betreffenden Magnetkopfes entlang der von ihm abzutastenden Spuren. Sie bestehen beispielsweise aus piezoelektrischen keramischen Elementen, die, wie aus Fig. 5 deutlicher zu ersehen ist, je aus zwei Scheiben 75 und 76 zusammengesetzt sind, zwischen welchen eine Elektrode 77 verläuft und die je an ihrer Aussenseite ebenfalls eine Elektrode 78 bzw. 79 tragen. Der Magnetkopf ist jeweils am freien Ende eines solchen Positionierelementes angeordnet. Durch Zuführung entsprechender elektrischer Steuersignale zu den Elektroden können die Positionierelemente kreisbogenförmig, senkrecht zu ihren Hauptflächen nach beiden Richtungen, mehr oder weniger stark verbogen werden, wodurch der betreffende Magnetkopf quer zu der von ihm abzutastenden Spur verstellbar ist und damit exakt entlang dieser Spur geführt werden kann. Die Ausbildung und Ansteuerung solcher Positionierelemente ist beispielsweise in der DE-OS 2 741 217 im Detail beschrieben.

Wie aus Fig. 5 ersichtlich, sind wie üblich die äusseren Elektroden 78 und 79 eines solchen Positionierelementes miteinander elektrisch verbunden, so dass zu einem solchen Positionierelement zwei elektrische Anschlüsse erforderlich sind. Da die Magnetköpfe 29 und 30 in einer Bewegungsrichtung des Magnetbandes und die Magnetköpfe 39 und 40 in der entgegengesetzten Bewegungsrichtung des Magnetbandes je für sich nebeneinander liegende Spuren abtasten, ist es erforderlich, den diesen Magnetköpfen zugeordneten Positionierelementen 71 und 72 bzw. 73 und 74 je für sich Steuersignale zuzuführen, welche die entsprechende Spurkorrektur vornehmen. Für vier Positionierelemente wären daher bei einem gemeinsamen Masseanschluss insgesamt fünf Anschlüsse erforderlich. Da solche Anschlüsse über Schleifringe zur rotierenden Trommel 53 geführt werden müssen, ist man bestrebt, die Anzahl dieser Anschlüsse so gering als möglich zu halten. Beim vorliegenden Ausführungsbeispiel sind daher zweckmässiger Weise jeweils zwei Positionierelemente elektrisch parallel geschaltet, die den Magnetköpfen zugeordnet sind, welche paarweise abwechselnd je nach der Drehrichtung der Trommel 53 zum Abtasten der innerhalb der beiden Längshälften des Magnetbandes liegenden Spuren vorgesehen sind und die bei einer Umdrehung der Trommel gleichzeitig mit dem Magnetband in Wirkverbindung stehen. Hierbei werden zwar auch die jeweils nicht in Funktion befindlichen Magnetköpfe gleichermassen wie die gerade zur Abtastung der Spuren in einer der beiden Längshälften des Magnetbandes herangezogenen Magnetköpfe verstellt, was aber bedeutungslos ist, da ja diese Magnetköpfe nicht in Funktion sind. Demgemäss sind, wie aus Fig. 5 ersichtlich ist, die Positionierelemente 71 und 74 und die Positionierelemente 72 und 73 jeweils parallel geschaltet, wodurch insgesamt nur drei Anschlüsse zu den vier Positionierelementen erforderlich sind. Diese drei Anschlüsse sind durch drei an der Trommel 53 vorgesehene, konzentrische Kontaktringe 80, 81 und 82 gebildet, welche mit an der Bandführung 16 angeordneten Schleifkontakten 83, 84 und 85 in Verbindung stehen. Der Schleifkontakt 84 bildet den Masseanschluss, wogegen der Schleifkontakt 83 mit einem ersten Steuersignalgenerator 86 und der Schleifkontakt 85 mit einem zweiten Steuersignalgenerator 87 verbunden ist. Die beiden Steuersignalgeneratoren geben je nach der Richtung der Spurabweichung ein entweder positives oder negatives Steuersignal und je nach dem Betrag der Spurabweichung ein Steuersignal mit entsprechender Amplitude ab, wodurch die Positionierelemente ihrerseits entsprechend ausgelenkt werden. Die beiden Steuersignalgeneratoren 86 und 87 werden hierbei von einer Schaltungsanordnung 88 angesteuert, welche Steuersignale liefert, die entsprechenden Spurabweichungssignalen proportional sind, welche dem Eingang 89 der Schaltungsanordnung 88 zugeführt werden, auf deren Gewinnung hier aber nicht näher einzugehen ist, da solche Massnahmen im vorliegenden Zusammenhang nicht erfindungswesentlich sind.

Eine andere Ausführungsform zur Führung der Magnetköpfe entlang der von ihnen abzutastenden Spuren ist in Fig. 6 dargestellt, wobei von einer Trommel 53, Bandführungen 16 und weiterer Trommel 66 ausgegangen wird, wie sie beim Ausführungsbeispiel nach Fig. 4 beschrieben wurden. Hier sind die Magnetköpfe 29 und 40, welche wieder jeweils gleichzeitig mit dem Magnetband 3 in Wirkverbindung stehen, auf einem gemeinsamen Halter 90 angeordnet, der einen an der Trommel 53 vorgesehenen Schlitz 91 durchsetzt und die beiden Niveaus für die Magnetköpfe 29 und 40 festlegt. Dieser Halter 90 ist nun über ein einziges elektrisch steuerbares Positionierelement 92 mit der Trommel 53 verbunden, wodurch die beiden Magnetköpfe 29 und 40 entsprechend der Auslenkung dieses Positionierelementes entlang der Spuren geführt werden. Damit die Magnetköpfe möglichst parallel zu ihren Niveaus verstellt werden, ist mit dem Halter 90 noch eine parallel zum Positionierelement 92 verlaufende Blattfeder 93 verbunden, die ihrerseits an der Trommel 53 befestigt ist. Auf diese Weise bilden das Positionierelement 92 und die Blattfeder 93 zusammen eine Parallelführung für den Halter 90. Durch die Verwendung nur eines Positionierelementes ist eine derartige Konstruktion einfach und preisgünstig. Selbstverständlich wären derartige Massnahmen auch bei einem Ausführungsbeispiel nach Fig. 2 anwendbar.

Bei den im vorstehenden beschriebenen Ausführungsbeispielen nach den Figuren 2, 4 und 6, sind die in beiden Niveaus rotierenden Magnetköpfe bei einer Umdrehung der Trommel abwechselnd jeweils paarweise gleichzeitig mit dem Magnetband in Wirkverbindung. In diesem Zusammenhang wurde erwähnt, dass je nach der Bewegungsrichtung des Magnetbandes nur diejenigen Magnetköpfe elektrisch aktiviert werden, welche auf einem solchen Niveau rotieren in dem sie Spuren in der dieser Bewegungsrichtung des Magnetbandes zugeordneten Längshälfte des Magnetbandes abtasten. Eine derartige elektrische Aktivierung der Magnetköpfe zur aktiven Abtastung der Spuren erfolgt dabei in Abhängigkeit der jeweiligen Bewegungsrichtung des Magnetbandes und/oder Drehrichtung der Trommel. Im folgenden werden Ausführungsformen beschrieben, bei welchen eine mechanische Aktivierung der Magnetköpfe zur aktiven Abtastung der innerhalb der betreffenden Längshälfte des Magnetbandes liegenden Spuren vorgesehen ist. Eine solche mechanische Aktivierung der Magnetköpfe kann durch eine entsprechende mechanische Verstellung derselben gegenüber der Mantelfläche der Trommel erfolgen. Die hierfür erforderliche Verstellungsbewegung kann dabei beispielsweise von einem an der Trommel vorgesehenen Hubmagneten bewirkt werden, welcher seinerseits über Schleifringe an der Trommel elektrisch gesteuert wird. Eine andere Möglichkeit besteht darin, die erforderliche Verstellbewegung vom Gerät her auf die rotierende Trommel zu übertragen. Ein diesbezügliches Ausführungsbeispiel zeigt Fig. 7, wobei von einer Konstruktion für die Trommel 53 und Bandführung 16 ausgegangen wird, die dem Ausführungsbeispiel nach Fig. 2 zugrunde liegt, was aber keinesfalls zwingend notwendig ist. In Fig. 7 sind dabei die eigentlichen konstruktiven Massnahmen zur Verstellung der Magnetköpfe nicht angegeben; dies erfolgt der Deutlichkeit halber in einem vergrösserten Massstab in eigenen Figuren, in welchen dann jeweils der in Fig. 7 mit strichlierten Linien umrandete und mit dem Bezugszeichen 94 bezeichnete Konstruktionsraum dargestellt ist.

Wie aus Fig. 7 ersichtlich, ist auf der Tragplatte 49 ein parallel zur Achse 52 des Motors 51 verlaufender Arm 95 befestigt, an dem ein Hebel 96 schwenkbar gelagert ist. Ein Ende 97 dieses Hebels ist gelenkig mit einer Schubstange 98 verbunden, welche von verstellbaren Geräteteilen oder von einem Hubmagneten her eine Verstellbewegung in Abhängigkeit der jeweiligen Bewegungsrichtung des Magnetbandes und/oder Drehrichtung der Trommel ausführt, welche dann auf den Hebel 96 übertragen wird. Das andere freie, vorzugsweise kugelförmig ausgebildete Ende 99 des Hebels 96 greift in eine Ringnut 100 ein, die an einer Schaltmuffe 101 vorgesehen ist, welche entlang der Achse 52, an der auch die hohl ausgebildete Trommel 53 befestigt ist, verschiebbar angeordnet ist. Die Schaltmuffe 101 ist ihrerseits verdrehungssicher mit der Trommel 53 gekuppelt, wozu zwei an ihr vorgesehene, einander gegenüberliegende Arme 102 und 103 in je eine von zwei Ausnehmungen 104 und 105 ragen, welche einander diametral gegenüberliegend, radial verlaufend an der Trommel 53 vorgesehen sind. Auf diese Weise rotiert die Schaltmuffe 101 zusammen mit der Trommel 53, kann aber in deren axialer Richtung mit dem Hebel 96 verstellt werden, womit die Verstellbewegung der Schubstange 98 in das Innere der Trommel 53 übertragbar ist. Die Ansätze 102 und 103 tragen an ihren Enden beispielsweise je einen Zapfen 106 bzw. 107, ein Achsstück oder dgl., von welchen dann die Verstellbewegung abnehmbar und jeweils den auf der Trommel einander diametral gegenüberliegenden Magnetköpfen zuführbar ist.

In dem in Fig. 8 gezeigten Ausschnitt 94 gemäss Fig. 7 ist eine Verstelleinrichtung 108 zur mechanischen Aktivierung der Magnetköpfe 29 und 40 gezeigt, bei welcher diese eine Schwenkbewegung gegenüber der Mantelfläche 60 der Trommel 53 ausführen, die aber im wesentlichen in radialer Richtung erfolgt, wodurch die Magnetköpfe jeweils vom Magnetband abgehoben und nicht entlang desselben verstellt werden, so dass sowohl keine Beschädigung der sehr empfindlichen Magnetköpfe als auch des ebenfalls sehr empfindlichen Magnetbandes eintreten kann. Beim vorliegenden Ausführungsbeispiel ist zur Verstellung der Magnetköpfe eine Wippe 109 vorgesehen, die in der Ausnehmung 105 an der Trommel 53 schwenkbar gelagert ist. Zu dieser Lagerung weist die Wippe 109 seitliche Achsstummel 110 auf, die in V-förmige Lagerstellen 111 eingreifen, welche ihrerseits seitlich an der Ausnehmung 105 der Trommel 53 vorgesehen sind. Die Magnetköpfe 29 bzw. 40 sind je an zueinander keilförmig orientierten Aussenflächen 112 und 113 der Wippe angeordnet. Parallel zu diesen Aussenflächen sind an der Wippe zwei Einstellschrauben 114 und 115 vorgesehen, deren freie Enden zum Zusammenwirken mit Anschlagflächen 116 und 117 an der Trommel vorgesehen sind, wodurch die Endlagen der Magnetköpfe gegenüber der Mantelfläche 60 der Trommel einstellbar sind. In einer Ausnehmung 118 der Wippe ist eine Achse 119 vorgesehen, die als Angriffspunkt für eine zur Verstelleinrichtung 108 gehörende Hebelanordnung dient. Diese Hebelanordnung besteht aus einem um eine Achse 120 in der Ausnehmung 105 der Trommel schwenkbar gelagerten Hebel 121, der ein gabelförmiges Ende 122 aufweist mit dem er mit dem Zapfen 107 am Ansatz 103 an der Schaltmuffe 101 in Verbindung steht. Am anderen Ende 123 des Hebels 121 ist schwenkbar ein Arm 124 gelagert, dessen freies, gabelförmig ausgebildetes Ende die Achse 119 an der Wippe umgreift. Auf diesen Arm 124 ist eine Schraubenfeder 125 aufgeschoben, die sich einerseits an einem am Arm 124 vorgesehenen Kragen 126 und andererseits an der Achse 119 abstützt.

In Fig. 8 ist die Verstelleinrichtung 108 und mit ihr die Wippe 109 in einer Lage gezeigt, in welcher der Magnetkopf 29 zur aktiven Spurabtastung mechanisch aktiviert ist, und sich dabei im Bereich der Mantelfläche 60 der Trommel 53 befindet, wogegen der Magnetkopf 40 mechanisch desaktiviert und demgemäss gegenüber der Mantelfläche 60 der Trommel 53 zurückgezogen ist. Diese durch die Einstellschraube 114 festgelegte und durch die Feder 125 bestimmte Lage der Wippe 109 ist wie ersichtlich eine Totpunktlage, da die Kraft der Feder 125 einerseits zwischen der Anschlagfläche 116 sowie dem V-förmigen Lager 111 und andererseits der den Hebel 121 lagernden Achse 120 wirksam ist. Auf diese Weise ist die vorliegende Position des Magnetkopfes 29 ausschliesslich durch die Totpunktlage bestimmt und damit eindeutig und spielfrei definiert. Ausserdem besteht dabei eine kräftemässige Entkopplung zur Schaltmuffe 101, wodurch die von ihr zu übertragende Verstellbewegung unkritisch ist und diesbezügliche Toleranzen keine Rolle spielen.

Um von dieser Lage der Verstelleinrichtung 108 ausgehend, den Magnetkopf 40 mechanisch zu aktivieren, wird die Schaltmuffe 101 in Richtung des Pfeiles 127 verstellt, wodurch der Hebel 121 und mit ihm der Arm 124 verschwenkt wird, bis schliesslich unter der Wirkung der Feder 125 die Wippe 109 in ihre andere Totpunktlage kippt, in der dann die Einstellschraube 115 die Lage des Magnetkopfes 40 gegenüber der Lauffläche 60 der Trommel 53 festlegt und in der dann der Magnetkopf 29 von der Lauffläche 60 zurückgezogen ist. Zur Verstellung der Magnetköpfe 30 und 39 ist eine gleiche Verstelleinrichtung vorgesehen, die vom Zapfen 106 am Ansatz 102 an der Schaltmuffe 101 betätigt wird.

Bei der Ausführungsform nach Fig. 9 besteht die Verstelleinrichtung 108 aus zwei zur gemeinsamen, gegenläufigen Verstellung miteinander gekoppelten Gelenkvierecken 128 und 129, auf welchen je einer der beiden Magnetköpfe 29 bzw. 40 angeordnet ist. Diese Gelenkvierecke bestehen aus je einer, den betreffenden Magnetkopf tragenden, die Koppel des Gelenkviereckes bildenden Platte 130 bzw. 131 und zwei die Kurbeln der Gelenkvierecke bildenden Hebeln 132 und 133, die mittels Achsen 134 und 135 in der Ausnehmung 105 der Trommel 53 schwenkbar gelagert sind. Diese Hebel und Platten sind miteinander gelenkig verbunden, wozu im vorliegenden Fall an den Platten rinnenförmige Lagerstellen 136, 137 bzw. 138, 139 vorgesehen sind, in welche an den freien Enden der Hebel angeordnete Querstreben 140, 141 bzw. 142, 143 eingreifen. Mit zwei zwischen den Platten 130 und 131 wirksamen Zugfedern 144 und 145 werden die Platten und Hebel gegeneinander verspannt, wodurch eine spielfreie gelenkige Verbindung zwischen diesen Teilen gebildet ist. Dadurch, dass die Hebel 132 und 133 beiden Gelenkvierecken 128 und 129 gemeinsam sind, ist die Kupplung zur gemeinsamen gegenläufigen Verstellung gegeben. Zur Übertragung der Verstellbewegung von der Schaltmuffe 101 auf die Gelenkvierecke ist hier einfach ein mit dem Hebel 132 verbundener Arm 146 vorgesehen, dessen freies, gabelförmig ausgebildetes Ende den Zapfen 107 am Arm 103 der Schaltmuffe 101 umgreift.

Um die jeweilige Endlage der Magnetköpfe 29 bzw. 40 gegenüber der Mantelfläche 60 der Trommel 53 zu definieren, ist an jeder der Platten 130 bzw. 131 eine Exzenterschraube 147 bzw. 148 vorgesehen, die mit entsprechenden Anschlägen 149 bzw. 150 zusammenwirken, die von der Trommel auskragend in die Ausnehmung 105 derselben ragen. Durch Verdrehen der Exzenterschrauben ist damit die jeweilige Endlage der Magnetköpfe einstellbar. Um auch hier diese Endlagen der Magnetköpfe durch jeweils eine Totpunktlage einwandfrei zu definieren ist am Hebel 133 ein Arm 151 angebracht, der mit einer in der Ausnehmung 105 der Trommel eingespannten Blattfeder 152 zusammenwirkt welche bestrebt ist, diesen Arm jeweils entweder im oder entgegen den Uhrzeigersinn zu verschwenken.

Das mechanische Aktivieren des Magnetkopfes 40 erfolgt wieder durch ein Verstellen der Schaltmuffe 101 in Richtung des Pfeiles 127, was zur Folge hat, dass die Gelenkvierecke 128 und 129 unter der Wirkung des Armes 146 entgegen den Uhrzeigersinn verschwenkt werden, wobei die Platte 130 gegenüber der Mantelfläche 60 der Trommel 53 zurückgezogen und die Platte 131 gleichzeitig zur Mantelfläche vorgeschoben wird, bis die Exzenterschraube 148 am Anschlag 150 zur Anlage kommt. Die Blattfeder 152 bewirkt dabei wieder einen Kippvorgang, wodurch auch die Endlage des Magnetkopfes 40 durch eine Totpunktlage festgelegt ist.

Beim Ausführungsbeispiel nach Fig. 10 ist davon ausgegangen, dass in beiden Niveaus, von welchen wieder jeweils eines den innerhalb einer der beiden Längshälften des Magnetbandes liegenden Spuren zugeordnet ist, wahlweise abwechselnd die gleiche Magnetkopfanordnung zur Abtastung der Spuren rotiert. Da bei den vorliegenden Ausführungsbeispielen angenommen ist, dass jeweils zwei um 180° gegeneinander versetzt angeordnete Magnetköpfe nacheinander die Spuren innerhalb einer Längshälfte des Magnetbandes abtasten, sind daher hier zwei Magnetköpfe zwischen den beiden Niveaus, die wieder im wesentlichen um einen durch den Betrag der halben Breite des Magnetbandes gegebenen Abstand gegeneinander versetzt sind, zu verstellen. In analoger Darstellungsweise zu den Ausführungsbeispielen nach den Figuren 8 und 9 ist daher in Fig. 10 eine Verstelleinrichtung 153 zur Verstellung eines Magnetkopfes 154 zwischen den beiden Niveaus dargestellt. Bei der Verstellung des Magnetkopfes von einem Niveau auf das andere soll dabei wieder vorgesehen sein, dass der Magnetkopf im wesentlichen vorerst gegenüber der Mantelfläche 60 der Trommel 53 in deren Inneres zurückgezogen, dann in axialer Richtung verstellt und anschliessend wieder zur Mantelfläche der Trommel vorgeschoben wird, damit weder der Magnetkopf noch das Magnetband beschädigt werden. Im vorliegenden Fall weist die Verstelleinrichtung 153 wieder ein Gelenkviereck 155 auf, dessen Koppel durch eine den Magnetkopf 154 tragende Platte 156 gebildet ist. Die Kurbeln des Gelenkvierecks bestehen hier aus vier Armen, von welchen je zwei Arme 157 und 158 jeweils seitlich der Platte 156 angeordnet und einerseits mit dieser und andererseits mit den Seitenwänden der Ausnehmung 105 an der Trommel 53 gelenkig verbunden sind. Auf diese Weise ist die Platte 156 zwischen den Armen hindurch, innerhalb der Ausnehmung 105, auf einem Kreisbogen verstellbar. Ferner weist die Verstelleinrichtung 153 eine Stange 159 auf, die gelenkig mit den Armen 157 und 158 verbunden ist und die mit einem gabelförmig ausgebildeten Ende den Zapfen 107 am Arm 103 der Schaltmuffe 101 umfasst.

Die beiden Endlagen des Magnetkopfes 154 in den beiden Niveaus sind durch zwei im Bereich der Mantelfläche 60 der Trommel 53 vorgesehene Einstellschrauben 160 und 161 festlegbar, die mit entsprechenden Anschlägen 162 bzw. 163 an der Platte 156 zusammenwirken. Um auch hier wieder vorteilhafterweise für die beiden Endlagen des Magnetkopfes 154 je eine Totpunktlage zu schaffen, ist eine Zugfeder 164 vorgesehen, die einerseits am Lagerpunkt des Schwenkarmes 158 an der Seitenwand der Ausnehmung 105 und andererseits am gelenkigen Verbindungspunkt zwischen der Stange 159 und dem Schwenkarm 157 angreift. Die Verstellung des Magnetkopfes 154 von der dargestellten Totpunktlage in die andere Totpunktlage auf dem weiteren Niveau erfolgt wieder durch Verstellung der Schaltmuffe 101 in Richtung des Pfeiles 127, wobei dann über die Stange 159 das Gelenkviereck 155 entlang eines Kreisbogens verschwenkt wird und schliesslich die Feder 164 die Endlage festlegt.

Wie bereits ausgeführt, kann an Stelle einer mechanischen Aktivierung der entsprechenden Magnetköpfe zur aktiven Abtastung der Spuren auch eine elektrische Aktivierung oder falls erwünscht, auch beides gleichzeitig, vorgenommen werden. Für eine solche elektrische Aktivierung der Magnetköpfe hat es sich insbesondere als vorteilhaft erwiesen, wenn dies möglichst unmittelbar an den Magnetköpfen geschieht, um allfällige Störeinflüsse möglichst auszuschalten. Demgemäss ist zweckmässigerweise zur elektrischen Aktivierung der Magnetköpfe an der Trommel eine Schalteranordnung vorgesehen, welche je nach ihrer Schaltlage die entsprechenden Magnetköpfe einschaltet und die anderen zur Desaktivierung ausschaltet. Da in einem solchen Fall dann eine allfällige zusätzliche mechanische Aktivierung der Magnetköpfe nicht mehr erforderlich erscheint, hat sich in diesem Zusammenhang weiters als vorteilhaft erwiesen, wenn die Magnetköpfe in radialer Richtung gegenüber der Mantelfläche der Trommel feststehend angeordnet sind, wodurch ein sehr einfacher mechanischer Aufbau erhalten wird.

Ausgehend von einem Ausführungsbeispiel entsprechend Fig. 2 ist ein Schaltbild zur elektrischen Aktivierung der Magnetköpfe in Fig. 11 und die mechanische Ausführungsform zur Betätigung der Schalteranordnung in Fig. 12 dargestellt. Wie aus Fig. 11 ersichtlich, sind zwei Umschalter 165 und 166 vorgesehen, von welchen der Umschalter 165 den Magnetköpfen 29 und 40 und der Umschalter 166 den Magnetköpfen 30 und 39 zugeordnet ist. Je nach der Schaltlage dieser Umschalter sind entweder die Magnetköpfe 39 und 40 oder die Magnetköpfe 29 und 30 kurzgeschlossen. Hierdurch wird auch ein einfacher Aufbau des rotierenden Transformators 167, welcher der Einfachheit halber in Fig. 12 nicht dargestellt ist, erhalten, da dieser im stillstehenden und im rotierenden Teil nur zwei Ringwicklungen aufweisen muss, weil ja die Magnetköpfe die nicht zur Wirkung gelangen sollen, unmittelbar kurzgeschlossen werden und daher hinsichtlich der Signalzuführung kein Unterschied gemacht werden muss.

Die Betätigung der Schalter 165 und 166, die wie aus Fig. 12 ersichtlich ist, unmittelbar an der Trommel 53 angeordnet sind, kann einfach und sicher vom Gerät her erfolgen. Hierzu ist an der Tragplatte 49 ein Arm 168 befestigt, an dessen freiem Ende ein Hebel 169 schwenkbar gelagert ist. Das eine Ende 170 dieses Hebels ist gabelförmig ausgebildet, wobei in die Gabel ein an einer Schubstange 171 angebrachter Zapfen 172 eingreift, wodurch die Verstellbewegung der Schubstange auf den Hebel übertragen wird. Auf der Achse 52 des Motors 51, auf der auch die Trommel 53 befestigt ist, ist eine Buchse 173 entgegen der Wirkung einer Feder 174 verschiebbar angeordnet. Ein an der Buchse 173 vorgesehener Ansatz 175 greift in eine entsprechende Ausnehmung 176 an der Trommel 53 ein, wodurch die Buchse verdrehungssicher mit der Trommel gekuppelt ist und zusammen mit dieser rotiert. Ein an der Buchse 173 vorgesehener Kragen 177 liegt den Schaltarmen 178 und 179 der Schalter 165 und 166 gegenüber, so dass sie von demselben betätigt werden können. Koaxial zur Antriebswelle 52 ist an der Buchse 173 eine kegelförmige Erhebung 180 vorgesehen, an welcher das freie Ende 181 des Hebels 169 angreift. Auf diese Weise kann die Buchse 173 mit nur geringer Reibung vom Hebel 169 her, entgegen der Wirkung der Feder 174, verstellt und damit die Schalter 165 und 166 entsprechend betätigt werden.

Eine andere vorteilhafte Betätigung für die Schalteranordnung wird erhalten, wenn die Schalter 165 und 166 automatisch in Abhängigkeit der Drehrichtung der Trommel 53 betätigt werden. Auch für die Realisierung einer derartigen Massnahme gibt es verschiedene Möglichkeiten. Eine erste Ausführungsform wird an Hand der Figuren 13 und 14 beschrieben. Die beiden Schalter 165 und 166 sind hier diametral an der Trommel 53 angeordnet, wobei ihre Schaltarme 178 und 179 tangential in entgegengesetzte Drehrichtungen der Trommel weisen. Am freien Ende der Achse 52, auf welcher die Trommel 53 befestigt ist, sitzt frei drehbar ein Flügel 182, der eine Nabe 183 aufweist, von der diametral zwei Arme 184 und 185 auskragen. Zwischen den beiden Schaltern 165 und 166 ist im Bereich des Flügels 182 an der Trommel ein stiftförmiger Mitnehmer 186 vorgesehen, welcher in der Drehrichtung 31 der Trommel den Flügel 182 mitnimmt. An einem wieder mit der Tragplatte 49 verbundenen Arm 187 ist eine zum freien Ende der Achse 52 hin ragende Blattfeder 188 befestigt, die an ihrem der Achse 52 zugewandten Ende einen kreisringförmigen Reibbelag 189 trägt, der mit der Nabe 183 des Flügels 182 zusammenwirkt, wodurch die Blattfeder 188 zusammen mit dem Reibbelag 189 eine geräteseitige Bremse 190 bilden, welche den Flügel 182 mit einer Bremskraft beaufschlagt.

Beginnt sich die Trommel 53 beispielsweise in der Drehrichtung 31 zu drehen, so wird der Flügel 182 durch die Bremse 190 so lange festgehalten, bis der Mitnehmer 186 den Arm 185 des Flügels 182 erreicht, wonach der Flügel 182 mitgenommen wird und sich weiterhin zusammen mit der Trommel 53 in der Drehrichtung 31 dreht. Wie ersichtlich, sind hierbei die Schalter 165 und 166 nicht betätigt.

Beginnt sich die Trommel in der zur Drehrichtung 31 entgegengesetzten Drehrichtung 38 zu drehen, so wird der Flügel 182 vorerst wieder von der Bremse 190 festgehalten, wobei sich der Mitnehmer 186 vom Arm 185 des Flügels 182 entfernt. Bei weiterer Drehung der Trommel kommen nun die Schaltarme 178 und 179 der beiden Schalter 165 und 166 mit den Armen 185 bzw. 184 in Wirkverbindung, wobei sie bestrebt sind, den Flügel 182 mitzunehmen. Hierbei werden nun, unter der Wirkung der Reaktionskraft auf die Bremskraft der Bremse 190, die Schaltarme 178 und 179 betätigt und anschliessend der Flügel 182 wieder von der Trommel mitgenommen, so dass er weiterhin zusammen mit dieser rotiert. In dieser Drehrichtung 38 der Trommel werden daher die beiden Schalter 165 und 166 betätigt, womit sie den gewünschten Schaltvorgang ausführen.

Selbstverständlich wäre es auch möglich, die Schalter einer Schalteranordnung in Abhängigkeit der Drehrichtung der Trommel so zu betätigen, dass immer nur einer ihrer beiden Schalter betätigt wird. Hierzu wäre der Mitnehmer 186 durch einen der beiden, entsprechend an der Trommel angeordneten Schalter zu ersetzen.

Eine andere Ausführungsform zur automatischen Betätigung der Schalteranordnung in Abhängigkeit der Drehrichtung der Trommel nützt die auftretenden Beschleunigungs- und Fliehkräfte aus. Wie in Fig. 15 gezeigt, ist hierzu ein pendelförmiger Hebel 191 vorgesehen, der an der Trommel 53 in einer Ebene senkrecht zur Trommelachse 52 und um eine zu dieser Trommelachse parallele, exzentrische Achse 192 schwenkbar ist. Ausgehend von der in Fig. 15 mit vollen Linien dargestellten Ruhelage des Hebels 191, die beispielsweise bei stillstehender Trommel durch eine Feder 193 oder eine Rast mit relativ geringer Kraft festgelegt ist, wird der Hebel 191 am Beginn der Rotation der Trommel 53, beispielsweise mit der Drehrichtung 38, in Richtung des Pfeiles 194 unter der Wirkung der Reaktionskräfte auf die dabei auftretende Beschleunigung der Trommel verstellt, wodurch er die in Fig. 15 mit punktierten Linien dargestellte Lage einnimmt. Diese Lage ist durch einen Anschlag 195 an der Trommel definiert, wobei der Hebel 191 hierauf unter der auf ihn einwirkenden Fliehkraft an diesem Anschlag angelegt gehalten wird. Wird die Trommel 53 wieder abgebremst, so wird der Hebel 191 wieder vom Anschlag 195 abgehoben und in Richtung seiner Ruhelage verstellt. Beginnt die Trommel 53 in der entgegengesetzten Drehrichtung zu rotieren, so wird der Hebel 191 in analoger Weise in der zum Pfeil 194 entgegengesetzten Richtung verstellt, wobei dann ein weiterer Anschlag 196 an der Trommel diese Verstellage des Hebels definiert.

Auf diese Weise können mit dem Hebel 191 Schalter einer Schalteranordnung betätigt werden, die an der Trommel im Bereich seiner beiden Verstellwege angeordnet sind. Beim vorliegenden Ausführungsbeispiel sind in jeder Verstellrichtung des Hebels 191 zwei magnetisch betätigbare Schalter 197, 198 bzw. 199, 200 an der Trommel angeordnet, die von zwei am Hebel 191 angebrachten Permanentmagneten 201 und 202 betätigt werden.

Wie aus Vorstehendem ersichtlich, gibt es eine Reihe von Ausgestaltungen der beschriebenen Ausführungsbeispiele, ohne dass dabei der Rahmen der Erfindung verlassen wird. Dies gilt insbesondere für die Ausgestaltung der Magnetkopfanordnung, mit der, je nach der Bewegungsrichtung des Magnetbandes, die Spuren innerhalb der betreffenden Längshälfte desselben mit entgegengesetzten Drehrichtungen der Magnetköpfe abgetastet werden.

**Patentansprüche**

1. Aufzeichnungs- und/oder Wiedergabegerät mit mindestens einer in einer vorgegebenen Drehrichtung mit einer vorgegebenen Geschwindigkeit rotierend antreibbaren Kopftrommel mit mindestens einem Magnetkopf, welche Kopftrommel ein Teil einer im Bereich des Magnetkopfes angeordneten trommelförmigen Bandführung für ein Magnetband bildet, das über mindestens einen Abschnitt der Mantelfläche der Bandführung und den auf einem vorgegebenen Niveau rotierenden Magnetkopf führbar ist, wobei der Magnetkopf schräg verlaufende parallele Spuren in einer vorgegebenen Abtastrichtung zwischen Bandkante und Bandmitte in einem vorgegebenen Spurmuster von zwei jeweils innerhalb einer der beiden Längshälften des Magnetbandes liegenden Spurmuster abtastet und mit einer Antriebseinrichtung zur Fortbewegung des Magnetbandes in einer vorgegebenen Bewegungsrichtung mit einer vorgegebenen Geschwindigkeit zur Abtastung der Spuren im vorgegebenen Spurmuster, dadurch gekennzeichnet,

a. dass mindestens ein auf einem gegenüber dem vorgegebenen Niveau im wesentlichen um einen durch den Betrag der halben Breite des Magnetbandes gegebenen Abstand versetzten weiteren Niveau wirkbarer Magnetkopf auf der Kopftrommel vorgesehen ist, zur Abtastung von schräg verlaufenden parallelen Spuren in dem weiteren, innerhalb der weiteren Längshälfte des Magnetbandes liegenden Spurmuster,

b. dass mit der Antriebseinrichtung das Magnetband gegenüber der vorgegebenen Bewegungsrichtung auch, in an sich bekannter Weise, in der entgegengesetzten Bewegungsrichtung mit der vorgegebenen Geschwindigkeit zur Abtastung der Spuren im weiteren Spurmuster antreibbar ist,

c. dass die Kopftrommel gegenüber der vorgegebenen Drehrichtung in der entgegengesetzten Drehrichtung mit der vorgegebenen Geschwindigkeit rotierend antreibbar ist, damit auch die schräg verlaufenden parallelen Spuren in dem weiteren Spurmuster in der vorgegebenen Abtastrichtung zwischen Bandkante und Bandmitte abgetastet werden,

d. dass eine Umschaltvorrichtung zumindest für das Umschalten der Drehrichtung der Kopftrommel und der Fortbewegung des Magnetbandes zwischen den erwähnten Richtungen und, falls erforderlich, für das im wesentlichen gleichzeitige Umschalten der elektrischen Signalaus/eingänge von einem zum anderen Magnetkopf vorgesehen ist, und

e. dass ohne Wenden des Magnetbandes, durch Betätigung der Umschaltvorrichtung die Spuren im weiteren Spurmuster durch den auf dem weiteren Niveau in entgegengesetzter Drehrichtung mit der vorgegebenen Geschwindigkeit zwischen Bandkante und Bandmitte rotierenden Magnetkopf abtastbar sind.

2. Gerät nach Anspruch 1, dadurch gekennzeichnet,

– dass der auf dem vorgegebenen Niveau und der auf dem weiteren Niveau rotierende Magnetkopf bis zu einer zurückgezogenen Lage, in der kein Kontakt mit dem Magnetband besteht, in radialer Richtung zurückziehbar sind,

– dass eine mechanische, von der Umschaltvorrichtung betätigbare Verstellvorrichtung für die radiale Zurückziehung jedes Magnetkopfes vorgesehen ist und

– dass bei jeder der beiden Fortbewegungsrichtungen jeder nicht wirksame Magnetkopf sich in der zurückgezogenen Lage befindet.

3. Gerät nach Anspruch 2, dadurch gekennzeichnet, dass der Magnetkopf mit einer von der Umschaltvorrichtung der betätigbaren Verstelleinrichtung zwischen zwei in Richtung von der Achse der Kopftrommel im wesentlichen um einen durch den Betrag der halben Breite des Magnetbandes gegebenen Abstand gegeneinander versetzten Totpunktlagen verstellbar angeordnet ist, wobei er bei der Überführung von einer Totpunktlage in die andere, in axialer Richtung verstellt wird.

4. Gerät nach Anspruch 3, dadurch gekennzeichnet, dass an der Kopftrommel in Richtung von deren Achse im wesentlichen um einen durch den Betrag der halben Breite des Magnetbandes gegebenen Abstand gegeneinander versetzt je mindestens ein Magnetkopf vorgesehen ist, dass in Abhängigkeit der beiden Bewegungsrichtungen des Magnetbandes und/oder der beiden Drehrichtungen der Kopftrommel jeweils einer der beiden Magnetköpfe zur aktiven Abtastung der Spuren innerhalb einer der beiden Längshälften des Magnetbandes elektrisch und/oder mechanisch aktivierbar ist und dass die beiden Magnetköpfe auf einer Wippe angeordnet sind.

5. Gerät nach Anspruch 3, dadurch gekennzeichnet, dass jeder der beiden Magnetköpfe auf einem Gelenkviereck angeordnet ist und die beiden Gelenkvierecke zur gemeinsamen, gegenläufigen Verstellung miteinander gekoppelt sind.

6. Gerät nach Anspruch 1, dadurch gekennzeichnet, dass der auf dem vorgegebenen Niveau und der auf dem weiteren Niveau rotierenden Magnetköpfe in radialer Richtung gegenüber der Mantelfläche der Kopftrommel feststehend angeordnet sind, dass zur elektrischen Aktivierung eines der beiden Magnetköpfe an der Kopftrommel eine Schalteranordnung vorgesehen ist, welche je nach ihrer Schaltlage einen der Magnetköpfe einschaltet und den anderen zur Desaktivierung ausschaltet und dass die Schalteranordnung über eine, koaxial zur Kopftrommelachse angeordnete, vom Gerät her in axialer Richtung verstellbarer Buchse betätigbar ist.

7. Gerät nach Anspruch 6, dadurch gekennzeichnet, dass die Schalteranordnung automatisch in Abhängigkeit der Drehrichtung der Kopftrommel betätigbar ist.

8. Gerät nach Anspruch 7, dadurch gekennzeichnet, dass zur automatischen Betätigung der Schalteranordnung ein um die Kopftrommelachse frei drehbar angeordneter, von der Kopftrommel drehrichtungsabhängig mitnehmbar, von einer geräteseitigen Bremse her mit einer Bremskraft beaufschlagter Flügel (182) vorgesehen ist.

9. Gerät nach Anspruch 8, dadurch gekennzeichnet, dass zur automatischen Betätigung der Schalteranordnung an der Kopftrommel ein in einer Ebene senkrecht zur Kopftrommelachse und um eine zu dieser parallele, exzentrische Achse verschwenkbarer pendelförmiger Hebel vorgesehen ist.

10. Gerät nach einem oder mehreren der Ansprüche 4 bis 9, dadurch gekennzeichnet, dass jeder der beiden Magnetköpfe zu seiner Führung entlang der Spuren über je eine elektrisch steuerbare Positioniereinrichtung mit der Kopftrommel verbunden ist und die beiden Positioniereinrichtungen elektrisch parallel geschaltet sind.

11. Gerät nach einem oder mehreren der Ansprüche 4 bis 9, dadurch gekennzeichnet, dass die beiden Magnetköpfe auf einem gemeinsamen Halter angeordnet sind, der über eine elektrisch steuerbare, zur Führung der Magnetköpfe entlang der Spuren vorgesehene Positioniereinrichtung mit der Kopftrommel verbunden ist.

### Claims

1. A recording and/or reproducing apparatus comprising at least one head drum carrying at least one magnetic head, which drum is rotatable in a given direction of rotation with a given speed and which constitutes a part of a drum-shaped tape guide for a magnetic tape, which guide is arranged near said magnetic head, which magnetic tape can pass around at least a part of the circumferential surface of the tape guide and past the magnetic head which rotates at a given level, the magnetic head scanning parallel oblique tracks of a track pattern situated within one of the two longitudinal halves of the magnetic tape between a tape edge and the centre axis of the tape in a given scanning direction, and comprising a drive arrangement for the transport of the magnetic tape in a given direction of movement at a given speed to scan the tracks in a given track pattern, characterized in that

a. for scanning parallel oblique tracks in the further track pattern which is situated within the further longitudinal half of the magnetic tape the head drum carries at least one magnetic head which can operate at a further level which is spaced from the given level by a distance which is equal to substantially half the width of the magnetic tape,

b. by means of the drive arrangement the magnetic tape can also be driven, in a manner known per se, in a direction of movement opposite to the given direction of movement and at the given speed in order to scan the tracks in the further track pattern,

c. the head drum can be rotated with the given speed in a direction of rotation opposite to the given direction of rotation to scan the oblique parallel tracks in the further track pattern between the tape edge and the centre axis of the tape in the given scanning direction,

d. there is provided at least one change-over device for at least the change-over of the direction of rotation of the head drum and the transport of the magnetic tape between the said directions of movement and, if required, for substantially simultaneously switching over the electrical signal outputs/inputs from one magnetic head to the other magnetic head, and

e. without the magnetic tape being reversed, by actuation of the change-over device, the tracks in the further track pattern can be scanned by the magnetic head which rotates at the further level between the tape edge and the centre axis of the tape in the opposite direction of rotation and at the given speed.

2. An apparatus as claimed in Claim 1, characterized in that
   – the magnetic heads which rotate at the given level and at the further level can be withdrawn in a radial direction into a position in which there is no contact with the magnetic tape,
   – there is provided a mechanical adjusting device which can be actuated by the change-over device for the radial withdrawal of each magnetic head, and
   – in each of the two directions of movement each magnetic head which is not operative is in the withdrawn position.

3. An apparatus as claimed in Claim 2, characterized in that by means of an over-centre adjusting device on the drum, which device can be actuated by the change-over device, the magnetic head is movable between two overcentre positions which in the direction of the axis of said drum are situated at a distance from each other which is substantially equal to half the width of the magnetic tape, said head, when it is moved from one over-centre position to the other, being moved in the axial direction.

4. An apparatus as claimed in Claim 3, characterized in that on the drum there are provided two magnetic heads which are spaced from each other in the direction of the drum axis by a distance substantially equal to half the width of the magnetic tape, that one of the two magnetic heads can be activated electrically and/or mechanically for the active scanning of the tracks situated within one or the other of the two longitudinal halves of the magnetic tape depending on the two directions of movement of the magnetic tape and/or the two directions of rotation of the drum and that the two magnetic heads are arranged on a toggle.

5. An apparatus as claimed in Claim 3, characterized in that each of the two magnetic heads is arranged on a four-bar linkage and the two four-bar linkages are coupled to each other so as to be movable jointly but in opposite directions.

6. An apparatus as claimed in Claim 1, characterized in that the magnetic heads which rotate at the given level and at the further level are arranged to be stationary in a radial direction relative to the circumferential surface of the drum, that for the selective electrical activation of one or the other of the two magnetic heads there is provided on the drum a switching device which, depending on its switching position switches on one of the magnetic heads and switches off the other magnetic head so as to deactivate the latter head, and that the switching device can be actuated via a sleeve which is coaxial with the drum axis and is axially movable by the apparatus.

7. An apparatus as claimed in Claim 6, characterized in that the switching device is adapted to be actuated automatically depending on the direction of rotation of the head drum.

8. An apparatus as claimed in Claim 7, characterized in that for the automatic actuation of the switching device there is provided as switch-actuating member which is mounted for free rotation about the drum axis and which can be driven by the head drum depending on the direction of rotation thereof, and on which a braking force can be exerted by a brake on the apparatus.

9. An apparatus as claimed in Claim 8, characterized in that for the automatic actuation of the switching device on the head drum there is provided a pendulum-shaped lever which is pivotable in a plane perpendicular to the drum axis and about an eccentric axis which is parallel to the drum axis.

10. An apparatus as claimed in any of the Claims 4 to 9, characterized in that each of the two magnetic heads for guiding it along the tracks, is connected to the head drum via an associated electrically controllable positioning element and that the two positioning elements are electrically connected in parallel.

11. An apparatus as claimed in any of the Claims 4 to 9, characterized in that the two magnetic heads are arranged on a common support, which is connected to the head drum via an electrically controllable positioning element for guiding the magnetic heads along the tracks.

**Revendications**

1. Appareil d'enregistrement et/ou de lecture comportant, d'une part, au moins un tambour porte-têtes pouvant être animé d'un mouvement de rotation ayant un sens et une vitesse prédéterminés, tambour porte-têtes qui est muni d'au moins une tête magnétique et qui forme une partie d'un guide de bande en forme de tambour disposé à l'endroit de la tête magnétique et servant au guidage d'une bande magnétique pouvant passer sur au moins une partie de la surface latérale du guide de bande et devant une tête magnétique tournant à un niveau prédéterminé, tête magnétique qui explore dans un sens d'exploration prédéterminé, entre le bord et le centre de la bande, des pistes parallèles obliques dans une configuration de pistes prédéterminée parmi deux configurations de pistes situées chacune dans l'une des deux moitiés longitudinales de la bande magnétique et, d'autre part, un dispositif d'entraînement servant à faire défiler la bande magnétique dans un sens de mouvement prédéterminé et à une vitesse prédéterminée pour explorer les pistes dans la configuration de pistes prédéterminée, caractérisé

a. en ce que sur le tambour porte-têtes, il est prévu au moins une tête magnétique pouvant fonctionner à un autre niveau qui, par rapport au niveau prédéterminé, est décalé d'une distance sensiblement égale à la moitié de la largeur de la bande magnétique, tête magnétique qui sert à explorer des pistes parallèles obliques dans l'autre configuration de pistes située dans l'autre moitié longitudinale de la bande magnétique,

b. en ce qu'au moyen du dispositif d'entraînement, la bande magnétique peut également être entraînée d'une manière en soi connue et à la vitesse prédéterminée dans le sens de mouvement opposé au sens de mouvement prédéterminé pour l'exploration des pistes dans l'autre configuration de pistes.

c. en ce que le tambour porte-têtes peut être animé d'un mouvement de rotation dans le sens opposé au sens de rotation prédéterminé et à la vitesse prédéterminée de façon à permettre d'explorer également dans le sens d'exploration prédéterminé, entre le bord et le centre de la bande, les pistes parallèles obliques de l'autre configuration de pistes,

d. en ce qu'il est prévu un dispositif de commutation servant au moins à commuter le sens de rotation du tambour porte-têtes et le défilement de la bande magnétique entre lesdits sens et, le cas échéant, à commuter à peu près simultanément les sorties/entrées électriques de signaux d'une tête magnétique à l'autre et

e. en ce que sans retournement de la bande magnétique, par la manœuvre du dispositif de commutation, les pistes dans l'autre configuration de pistes peuvent être explorées par la tête magnétique tournant à l'autre niveau dans le sens de rotation opposé et à la vitesse prédéterminée, entre le bord et le centre de la bande.

2. Dispositif selon la revendication 1, caractérisé

– en ce que la tête magnétique tournant au niveau prédéterminé et la tête magnétique tournant à l'autre niveau peuvent être retirées dans le sens radial jusque dans une position rentrée dans laquelle il n'y a plus de contact avec la bande magnétique,

– en ce que pour retirer chaque tête magnétique dans le sens radial, il est prévu un dispositif de commande mécanique pouvant être manœuvré par le dispositif de commutation et

– en ce que dans chacun des deux sens de défilement, chaque tête magnétique non active se trouve dans la position rentrée.

3. Appareil selon la revendication 2, caractérisé en ce qu'au moyen d'un dispositif de déplacement pouvant être manœuvré par le dispositif de commutation, la tête magnétique peut être déplacée entre deux positions au point mort qui sont séparées par une distance sensiblement égale à la moitié de la largeur de la bande magnétique, tête magnétique qui lors du changement de position au point mort, est déplacée dans le sens axial.

4. Appareil selon la revendication 3, caractérisé en ce que sur le tambour porte-têtes sont prévues au moins deux têtes magnétiques qui dans le sens de l'axe du tambour sont décalées l'une par rapport à l'autre d'une distance sensiblement égale à la moitié de la largeur de la bande magnétique, en ce que selon les deux sens de mouvement de la bande magnétique et/ou des deux sens de rotation du tambour porte-têtes, l'une des deux têtes magnétiques peut être activée par voie électrique et/ou par voie mécanique pour l'exploration active des pistes dans l'une des deux moitiés longitudinales de la bande magnétique et en ce que les deux têtes magnétiques sont disposées sur un bras articulé.

5. Appareil selon la revendication 3, caractérisé en ce que chacune des deux têtes magnétiques est disposée sur un quadrilatère articulé et en ce que les deux quadrilatères articulés sont couplés entre eux pour permettre de les déplacer conjointement dans des directions opposées.

6. Appareil selon la revendication 1, caractérisé en ce que les têtes magnétiques tournant au niveau prédéterminé et à l'autre niveau sont disposées de façon à être stationnaire dans le sens radial par rapport à la surface latérale du tambour porte-têtes, en ce que pour l'activation électrique de l'une de deux têtes magnétiques, il est prévu sur le tambour porte-têtes un dispositif de commutation qui selon sa position de commutation, enclenche l'une des têtes magnétiques et déclenche l'autre tête magnétique de façon à la désactiver et en ce que le dispositif de commutation peut être actionné par l'intermédiaire d'une douille coaxiale par rapport à l'axe du tambour porte-têtes et pouvant être déplacée dans le sens axial à partir de l'appareil.

7. Dispositif selon la revendication 6, caractérisé en ce que le dispositif de commutation peut être actionné automatiquement en fonction du sens de rotation du tambour porte-têtes.

8. Appareil selon la revendication 7, caractérisé en ce que pour l'actionnement automatique du dispositif de commutation, il est prévu une ailette disposée à rotation libre autour de l'axe du tambour porte-têtes et pouvant être entraînée par le tambour porte-têtes en fonction de son sens de rotation, ailette sur laquelle peut être exercée une force de freinage par un frein prévu du côté de l'appareil.

9. Appareil selon la revendication 8, caractérisé en ce que pour l'activation automatique du dispositif de commutation, il est prévu sur le tambour porte-têtes un levier en forme de pendule pouvant pivoter dans un plan perpendiculaire à l'axe du tambour porte-têtes et autour d'un arbre excentrique, parallèle à l'axe du tambour porte-têtes.

10. Appareil selon l'une des revendications 4 à 9, caractérisé en ce que pour leur guidage le long des pistes, les deux têtes magnétiques, sont réunies chacune au tambour porte-têtes par l'intermédiaire d'un dispositif de positionnement à commande électrique et en ce que les deux dispositifs de positionnement sont montés en parallèle.

11. Appareil selon l'une des revendications 4 à 9, caractérisé en ce que les deux têtes magnétiques sont disposées sur un support commun qui est réuni au tambour porte-têtes par l'intermédiaire d'un dispositif de positionnement à commande électrique prévu pour guider les têtes magnétiques le long des pistes.

# Fig.1

Fig.2

Fig.3

**0 023 067**

Fig.4

Fig.5

21

Fig.6

Fig.7

Fig.8

Fig.9

Fig.10

Fig.11

Fig.12

0 023 067

Fig.13

Fig.14

29

Fig.15